# EUROPÄISCHE PATENTSCHRIFT

(11) **EP 3 877 679 B1**
(45) Veröffentlichungstag und Bekanntmachung des Hinweises auf die Patenterteilung: **26.10.2022**
(21) Anmeldenummer: 19797708.5
(22) Anmeldetag: 31.10.2019
(51) Int. Cl.: F16K 1/00, B60T 8/36

(54) **MAGNETVENTILVORRICHTUNG FÜR EIN DRUCKAUSGEGLICHENES MAGNETVENTIL, EIN DRUCKAUSGEGLICHENES MAGNETVENTIL UND MAGNETVENTILSYSTEM**
MAGNETIC VALVE ASEMBLY FOR A PRESSURE BALANCED MAGNETIC VALVE, PRESURE BALANCED MAGNETIC VALVE
ENSEMBLE DE VALVE MAGNÉTIQUE POUR VALVE COMPENSÉE EN PRESSION, VALVE COMPENSÉE EN PRESSION

(30) Priorität: 05.11.2018 DE 102018127573
(43) Veröffentlichungstag der Anmeldung: 15.09.2021
(73) Patentinhaber: ETO MAGNETIC GmbH, 78333 Stockach (DE)
(72) Erfinder: THODE, Oliver, 78333 Stockach (DE)
(74) Vertreter: Daub, Thomas
(86) Internationale Anmeldenummer: PCT/EP2019/079908
(87) Internationale Veröffentlichungsnummer: WO 2020/094507

(56) Entgegenhaltungen:
- WO-A1-2005/059420
- WO-A1-2006/079382
- GB-A- 2 117 850
- US-A- 4 611 631

## Beschreibung

### Stand der Technik

Die Erfindung betrifft eine Magnetventilvorrichtung für ein druckausgeglichenes Magnetventil nach dem Oberbegriff des Anspruchs 1, ein druckausgeglichenes Magnetventil nach dem Oberbegriff des Anspruchs 17, ein Magnetventilsystem nach Anspruch 18 und ein Verfahren mit der Magnetventilvorrichtung nach Anspruch 21.

Es ist bereits eine Magnetventilvorrichtung für ein druckausgeglichenes Magnetventil mit einem Magnetteil, aufweisend zumindest eine Magnetspulenwicklung, und mit einem Ventilteil, aufweisend zumindest eine Stößeleinheit, welche zumindest dazu vorgesehen ist, zumindest einen Durchflusspfad durch das Magnetventil zu steuern und welche zumindest dazu vorgesehen ist, mit einem innerhalb des Magnetteils erzeugten Magnetfeld zumindest zu einer Erzeugung zumindest einer Bewegung der Stößeleinheit wechselzuwirken, vorgeschlagen worden. Ein gattungsgemäßes Ventil ist im Dokument WO 2006/079382 A1 offenbart.

Die Aufgabe der Erfindung besteht insbesondere darin, eine gattungsgemäße Vorrichtung mit einer besonders effizienten Magnetkraftnutzung bereitzustellen. Die Aufgabe wird erfindungsgemäß durch die Merkmale der Patentansprüche 1, 17, 18 und 21 gelöst, während vorteilhafte Ausgestaltungen und Weiterbildungen der Erfindung den Unteransprüchen entnommen werden können.

### Vorteile der Erfindung

Die Erfindung geht aus von einer Magnetventilvorrichtung für ein druckausgeglichenes Magnetventil, von einer insbesondere druckausgleichenden Magnetventilvorrichtung mit einem Magnetteil, aufweisend zumindest eine Magnetspulenwicklung und vorzugsweise zumindest einen zumindest teilweise in einem Inneren der Magnetspulenwicklung angeordneten Magnetkern, und mit einem Ventilteil, aufweisend zumindest eine Stößeleinheit, welche zumindest dazu vorgesehen ist, zumindest einen Durchflusspfad durch das Magnetventil zu steuern und welche zumindest dazu vorgesehen ist, mit einem innerhalb des Magnetteils erzeugten Magnetfeld zumindest zu einer Erzeugung zumindest einer Bewegung der Stößeleinheit wechselzuwirken.

Es wird vorgeschlagen, dass der Magnetteil und der Ventilteil separierbare, unabhängig voneinander funktionsfähige Module ausbilden, welche insbesondere frei sind von gemeinsamen funktionellen Bauteilen, wie beispielsweise einem gemeinsamen Magnetanker. Dadurch kann vorteilhaft eine besonders effiziente Magnetkraftnutzung erreicht werden, insbesondere indem eine Reibkraft zwischen Komponenten des Magnetteils und Komponenten des Ventilteils bei einer Schaltung des Magnetventils reduziert werden kann. Vorteilhaft sind der Ventilteil, insbesondere die Stößeleinheit des Ventilteils, und der Magnetteil auch in einem montierten Zustand weitestgehend voneinander entkoppelt, d.h. insbesondere voneinander entkoppelt abgesehen von einer einfachen Abstützung des Ventilteils an dem Magnetteil und/oder abgesehen von einem einfachen, vorzugsweise planen, Sitz des Magnetteils auf dem Ventilteil. Vorteilhaft kann eine einfache Montage ermöglicht werden, insbesondere indem zu einer Herstellung einer vollen Funktionsfähigkeit des Magnetventils ausschließlich eine simple Verbindung zweier Module notwendig ist und eine aufwändige Ausrichtung der Einzelteile des Magnetventils, beispielsweise der Magnetspulenwicklung und der Stößeleinheit, zueinander vorteilhaft entfallen kann. Dadurch kann vorteilhaft eine Montage der Magnetventilvorrichtung, ein Umbau der Magnetventilvorrichtung und/oder ein Austausch eines Magnetteils oder eines Ventilteils der Magnetventilvorrichtung außerhalb der Produktionsstätte, z.B. bei direkt einem Kunden oder in einer Werkstatt, ermöglicht werden. Vorteilhaft kann eine einfache Konfektionierbarkeit eines Magnetventils ermöglicht werden, beispielsweise indem verschiedene Ventilteile oder verschiedene Magnetteile einfach miteinander kombinierbar sind. Durch diese Kombinierbarkeit kann vorteilhaft ein Logistikaufwand, beispielsweise ein Aufwand für eine Lagerhaltung einer Vielzahl verschiedener Ventile oder ein Aufwand für eine Dokumentation einer Vielzahl verschiedener Ventile gering gehalten werden, insbesondere indem nicht jede mögliche Kombination, d.h. insbesondere nicht jedes mögliche Magnetventil, dokumentiert und/oder vorrätig gehalten werden muss, sondern nur die einzelnen Magnetteile und Ventilteile, welche eine große Anzahl an Kombinationen erlauben. Vorteilhaft können dadurch Kosten gering gehalten werden. Druckausgleichende Magnetventile sind besonders vorteilhaft, da ein in dem Magnetventil herrschender Druck für eine Aufstellung einer Kräftebilanz des Magnetventils unberücksichtigt bleiben kann, demnach insbesondere nicht bei einer Auslegung von Magnetkräften berücksichtigt werden muss. Dadurch können Magnetkräfte, welche für eine Schaltung des Magnetventils notwendig sind, vorteilhaft niedrig gehalten werden, wodurch eine Größe der verwendeten Magnete vorteilhaft reduziert werden kann. Dadurch können vorteilhaft besonders kompakte und/oder besonders kostengünstige Magnetventile erhalten werden.

Unter einem "druckausgeglichenen Magnetventil" soll insbesondere ein Magnetventil verstanden werden, welches zumindest im Wesentlichen frei ist von eine Ventilbewegung beeinflussenden und/oder erschwerenden Druckunterschieden auf verschiedenen, insbesondere gegenüberliegenden, Seiten des Magnetventils, insbesondere eines Ankers des Magnetventils. Unter einem "Magnetteil" soll insbesondere ein Modul der Magnetventilvorrichtung verstanden werden, welches dazu vorgesehen ist, ein Magnetfeld zu erzeugen, welches insbesondere zu einer Schaltung und/oder zu einer Steuerung eines Magnetventils vorgesehen ist. Unter einem "Ventilteil" soll insbesondere ein Modul der Magnetventilvorrichtung verstanden werden, welches dazu vorgesehen ist, einen Fluss und/oder einen Pfad eines Flusses, insbesondere einen Durchflusspfad, zu manipulieren, vorzugsweise zu steuern und/oder zu regeln, wozu der Ventilteil vorzugsweise eine bewegliche Ventildichtung aufweist, welche dazu vorgesehen ist, zumindest einen Pfad des Flusses zu blockieren und/oder freizugeben. Vorzugsweise sind der Ventilteil und der Magnetteil, insbesondere mittels zueinander korrespondierender Koppelelemente, auf einfache Weise miteinander koppelbar. Bevorzugt ist die Kopplung zwischen Ventilteil und Magnetteil zerstörungsfrei lösbar. Beispielsweise sind der Ventilteil und der Magnetteil mittels einer Formschlussverbindung, beispielsweise einer Clipsverbindung, einer Aufschraubverbindung, z.B. mittels eines Außengewindes des Magnetteils, einer Druckknopfverbindung, einer Klettverbindung und/oder dergleichen miteinander koppelbar. Alternativ oder zusätzlich können der Ventilteil und der Magnetteil mittels einer Schraubenverbindung, mittels einer Nietverbindung oder dergleichen miteinander koppelbar ausgebildet sein. Es ist zudem denkbar, dass die Kopplung zwischen dem Ventilteil und dem Magnetteil zumindest im Wesentlichen druckdicht ausgebildet ist. Unter einer "im Wesentlichen druckdichten" Kopplung soll insbesondere eine Kopplung verstanden werden, welche zumindest dazu vorgesehen ist, einem Druck von wenigstens 10 bar, vorzugsweise wenigstens 20 bar, vorteilhaft wenigstens 30 bar, bevorzugt wenigstens 50 bar und besonders bevorzugt wenigstens 80 bar standzuhalten.

Unter einer Stößeleinheit soll insbesondere eine Einheit verstanden werden, welche dazu vorgesehen ist, eine Öffnungs-, Schließungs- und/oder Umschaltbewegung des Magnetventils zu übertragen und/oder zu erzeugen. Die Stößeleinheit umfasst zumindest einen Ankerstößel, welcher einstückig oder mehrteilig ausgebildet sein kann. Beispielsweise kann ein magnetteilseitiger Teil des Ankerstößels zumindest teilweise aus einem ferromagnetischen und/oder weichmagnetischen Material, beispielsweise einem Eisen oder einer Eisenlegierung, und ein dem Magnetteil abgewandter Teil des Ankerstößels zumindest teilweise aus einem abdichtenden Material, beispielsweise einem Elastomer, ausgebildet sein. Vorzugsweise ist zumindest der magnetteilseitige Teil des Ankerstößels dazu vorgesehen, mit dem Magnetfeld des Magnetteils wechselzuwirken. Insbesondere ist das Magnetfeld des Magnetteils dazu vorgesehen, den Ankerstößel in Richtung des Magnetteils zu ziehen. Insbesondere ist die Stößeleinheit innerhalb des Ventilteils beweglich gelagert. Insbesondere ist zumindest der Ankerstößel gleitend innerhalb des Ventilteils gelagert. Unter einem "Modul" soll insbesondere ein austauschbares, insbesondere komplexes, Element innerhalb eines Gesamtsystems, eines Gerätes oder einer Maschine, vorzugsweise innerhalb eines Magnetventils, verstanden werden, welches vorzugsweise eine geschlossene Funktionseinheit bildet. Insbesondere sind die Module, vorzugsweise zumindest das durch den Ventilteil gebildete Modul und das durch den Magnetteil gebildete Modul, zu einem Gesamtsystem, vorzugsweise zu dem Magnetventil, zusammenfügbar. Vorzugsweise weisen die Module, vorzugsweise zumindest das durch den Ventilteil gebildete Modul und das durch den Magnetteil gebildete Modul, jeweils zumindest eine Schnittstelle auf, welche insbesondere dazu vorgesehen sind, eine Interaktion der Module untereinander, beispielsweise über das Magnetfeld des Magnetteils, zu erlauben. Die Magnetspulenwicklung bildet insbesondere ein Solenoid aus. Unter einem "Solenoid" soll insbesondere eine zylindrische Metallspule verstanden werden, welche bei einem Stromdurchfluss ähnlich wie ein Stabmagnet wirkt. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Der Magnetkern ist insbesondere als ein, vorzugsweise zumindest abschnittsweise unterbrochener, Eisenkreis ausgebildet. Alternativ kann der Magnetteil auch frei von einem Magnetkern, insbesondere einem Eisenkreis ausgebildet sein.

Ferner wird vorgeschlagen, dass der Ventilteil zumindest im Wesentlichen frei ist von, insbesondere beweglich gelagerten, in zumindest einem Betriebszustand in den Magnetteil zumindest teilweise eingreifenden Komponenten, insbesondere abgesehen von ausschließlich für eine gegenseitige Fixierung der Module des Ventilteils und des Magnetteils vorgesehenen Komponenten wie beispielsweise Kraft- oder Formschlusseingriffe. Dadurch kann vorteilhaft eine besonders effiziente Magnetkraftnutzung erreicht werden, insbesondere indem eine Reibkraft zwischen Komponenten des Magnetteils und Komponenten des Ventilteils bei einer Schaltung des Magnetventils reduziert werden kann. Insbesondere kann dadurch vorteilhaft eine Reibung zumindest eines Teils der beweglich gelagerten Stößeleinheit mit einem Teil der Magneteinheit, beispielsweise einer Dichtung oder einer Wandung, welche die Stößeleinheit innerhalb des Magnetteils führt, vermieden werden. Dadurch kann vorteilhaft ein Verschleiß reduziert werden, eine Überhitzung von Komponenten des Magnetventils, beispielsweise eine übermäßige Erwärmung des Ventilteils durch einen zu großen Wärmeübertrag von der betriebsheißen Magnetspulenwicklung des Magnetteils auf den Ventilteil, verhindert werden und/oder eine für eine Bewegung der Stößeleinheit notwendige Magnetkraft gering gehalten werden. Vorteilhaft kann eine Komplexität, insbesondere ein Herstellungsaufwand des Magnetventils, gering gehalten werden, indem vorteilhaft auf eine Einpassung und/oder Anpassung einer in zumindest dem Betriebszustand in den Magnetteil zumindest teilweise eingreifenden Komponente der Ventileinheit, beispielsweise eines Magnetankers, in eine Öffnung des Magnetteils, insbesondere in das Innere einer Spulenwicklung des Magnetteils, verzichtet werden kann. Dadurch kann vorteilhaft auf ein aufwändiges Einstellen von Fluchtungstoleranzen zwischen dem Magnetteil und dem Ventilteil verzichtet werden, wodurch besonders vorteilhaft zusätzliche durch eine ungenaue Fluchtung und/oder durch Fluchtungsfehler erzeugte Reibungskräfte vermieden werden können. Dadurch, dass weniger zusätzliche Reibkräfte einer Bewegung der Stößeleinheit entgegenwirken, sind die für die Bewegung der Stößeleinheit notwendigen Magnetkräfte vorteilhaft reduzierbar, wodurch insbesondere Kosten für die Spulenwicklung und/oder ein nötiger Bauraum für die Spulenwicklung reduziert werden können. Zudem kann vorteilhaft eine Montage der Magnetventilvorrichtung, ein Umbau der Magnetventilvorrichtung und/oder ein Austausch eines Magnetteils und/oder eines Ventilteils vereinfacht werden, insbesondere indem keine genaue Einstellung von Fluchtungstoleranzen nötig ist. Vorteilhaft kann die Montage der Magnetventilvorrichtung, der Umbau der Magnetventilvorrichtung und/oder der Austausch des Magnetteils und/oder des Ventilteils unabhängig von einem Einsatz von Spezialwerkzeugen zu einer exakten Ausrichtung vorgenommen werden. Darunter, dass eine Baueinheit einer Vorrichtung "im Wesentlichen frei" ist von in eine andere Baueinheit der Vorrichtung eingreifenden Komponenten, soll insbesondere verstanden werden, dass die Baueinheit frei ist von für eine Hauptfunktion zuständigen, insbesondere für eine Ventilschaltfunktion zuständigen, Komponenten, welche in die andere Baueinheit eingreifen. Unter "teilweise eingreifend" soll insbesondere zumindest zu 15 % eines Gesamtvolumens, vorzugsweise zumindest zu 10 % eines Gesamtvolumens, bevorzugt zumindest zu 5 % eines Gesamtvolumens und besonders bevorzugt zumindest zu 2 % eines Gesamtvolumens verstanden werden.

Zudem wird vorgeschlagen, dass der Magnetteil zumindest im Wesentlichen frei ist von beweglich gelagerten Komponenten und/oder von in zumindest einem Betriebszustand in den Ventilteil zumindest teilweise eingreifenden Komponenten. Dadurch kann vorteilhaft eine besonders effiziente Magnetkraftnutzung erreicht werden, insbesondere indem eine Reibkraft zwischen Komponenten des Magnetteils und Komponenten des Ventilteils und/oder zwischen Komponenten innerhalb des Magnetteils bei einer Schaltung des Magnetventils reduziert werden kann. Dadurch kann vorteilhaft ein Verschleiß reduziert werden, eine Überhitzung von Komponenten des Magnetventils verhindert werden, beispielsweise eine übermäßige Erwärmung des Ventilteils durch einen zu großen Wärmeübertrag von der betriebsheißen Magnetspulenwicklung des Magnetteils auf den Ventilteil, und/oder eine für eine Bewegung der Stößeleinheit notwendige Magnetkraft gering gehalten werden. Zudem kann vorteilhaft eine Komplexität, insbesondere ein Herstellungsaufwand, insbesondere für den Magnetteil gering gehalten werden.

Des Weiteren wird vorgeschlagen, dass der Ventilteil und/oder der Magnetteil eine Dichtungs- und Montagevorrichtung aufweist, welche dazu vorgesehen ist, eine, insbesondere druckdichte, Kopplung des durch den Ventilteil gebildeten Moduls und des durch den Magnetteil gebildeten Moduls herzustellen. Dadurch kann insbesondere eine vorteilhafte und/oder einfache Montage der Magnetventilvorrichtung erreicht werden. Die Dichtungs- und Montagevorrichtung umfasst insbesondere zumindest ein Koppelelement, vorzugsweise die korrespondierenden Koppelelemente. Die Dichtungs- und Montagevorrichtung umfasst insbesondere zumindest ein Dichtelement, beispielsweise eine Kunststoffdichtung wie z.B. einen (Elastomer-)O-Ring und/oder eine Metalldichtung wie z.B. einen Kupfer-Dichtring. Die Dichtungs- und Montagevorrichtung ist insbesondere dazu vorgesehen, ein Inneres des Magnetventils, insbesondere den Durchflusspfad des Magnetventils gegenüber einem das Magnetventil umgebenden Äußeren, abzudichten. Alternativ oder zusätzlich kann die Dichtungs- und Montagevorrichtung dazu vorgesehen sein, den Magnetteil gegenüber dem Ventilteil, insbesondere gegenüber in dem Ventilteil angeordneten Hohlräumen zu einer Fluidführung oder -aufnahme, abzudichten oder umgekehrt. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Wenn das mit dem Ventilteil gekoppelte, durch das Magnetteil gebildete Modul zerstörungsfrei von dem Ventilteil entkoppelbar ist, kann vorteilhaft ein einfacher Austausch, ein einfacher Umbau und/oder eine einfache Reparatur der Magnetventilvorrichtung ermöglicht werden, wodurch vorteilhaft Kosten gering gehalten werden können. Zudem kann dadurch vorteilhaft eine hohe Flexibilität erreicht werden, beispielsweise indem eine Magnetventilvorrichtung durch einen Umbau einfach an geänderte Betriebsbedingungen angepasst werden kann, z.B. kann ein Magnetteil mit einem stärkeren Magneten oder mit einem anderen Stromanschluss oder ein Ventilteil mit einer anderen Ventilschaltung oder einer anderen Durchflusskapazität montiert werden. Vorteilhaft ist die Magnetventilvorrichtung in einem in ein Gerät, beispielsweise in einem Fahrzeug, eingebauten Zustand zerstörungsfrei entkoppelbar. Darunter, dass das "durch das Magnetteil gebildete Modul zerstörungsfrei von dem Ventilteil entkoppelbar ist", soll insbesondere verstanden werden, dass zumindest das Magnetteil oder das Ventilteil, vorzugsweise das Magnetteil und das Ventilteil, einen Entkoppelvorgang zerstörungsfrei überstehen, wobei insbesondere eine volle Funktionsfähigkeit der Module des Ventilteils und/oder des Magnetteils auch nach dem Entkoppelvorgang erhalten bleibt.

Außerdem wird vorgeschlagen, dass die Stößeleinheit, insbesondere zumindest auf einer in einem montierten Zustand dem Magnetteil zugewandten Seite der Stößeleinheit, vorzugsweise des Ankerstößels der Stößeleinheit, zumindest teilweise einen Flachanker ausbildet. Dadurch können vorteilhafte Wechselwirkungseigenschaften zwischen dem Magnetfeld des Magnetteils und dem Ventilteil, insbesondere der Stößeleinheit, erreicht werden. Vorteilhaft kann eine besonders effektive Kraftübertragung einer Magnetkraft erreicht werden. Vorteilhaft kann eine Kopplung des Magnetfelds des Magnetteils mit einem ferromagnetischen Anteil des Ankerstößels der Stößeleinheit in einem betriebsbereiten Zustand der Magnetventilvorrichtung optimiert werden. Vorteilhaft kann durch den Flachanker eine hohe Magnetkraft erreicht werden. Insbesondere bei einem Einsatz der Magnetventilvorrichtung in einem Fahrzeug, welches Umgebungstemperaturen zwischen -40°C und +80 °C, insbesondere bis zu 130°C, ausgesetzt sein kann, kommt es bei einer Verwendung von gleitenden Dichtungen potentiell zu einer signifikanten temperaturabhängigen Reibhysterese, welche vorteilhaft mittels der durch die Verwendung eines Flachankers erheblich erhöhten Magnetkraft überwunden werden kann. Unter einem "Flachanker" soll insbesondere ein Ankerstößel verstanden werden, welcher an zumindest einem, insbesondere in eine vorgesehene Bewegungsrichtung des Ankerstößels zeigenden, Ende eine Abflachung, insbesondere eine Art Scheibe, ausbildet. Insbesondere weist die Abflachung des Ankerstößels, insbesondere die Scheibe, senkrecht zu einer Bewegungsachse des Ankerstößels einen Durchmesser auf, welcher wesentlich größer ist als ein Durchmesser des Magnetkerns, welcher zu einer Wechselwirkung mit dem Ankerstößel vorgesehen ist und/oder wesentlich größer ist als ein Durchmesser des Inneren der Magnetspulenwicklung. Insbesondere weist die Abflachung des Ankerstößels, insbesondere die Scheibe, senkrecht zu einer Bewegungsachse des Ankerstößels einen Durchmesser auf, welcher wesentlich größer ist als ein mittlerer Durchmesser der Stößeleinheit senkrecht zu einer Bewegungsachse des Ankerstößels. Unter "wesentlich größer" soll zumindest um 10 % größer, vorzugsweise zumindest um 20 %, bevorzugt zumindest um 30 % größer und besonders bevorzugt zumindest um 100 % größer verstanden werden.

Zusätzlich wird vorgeschlagen, dass die Stößeleinheit zumindest ein Druckausgleichselement aufweist, welches insbesondere dazu vorgesehen ist, einen Druck auf einer dem Magnetteil zugewandten Seite der Stößeleinheit und einen Druck auf einer dem Magnetteil abgewandten Seite der Stößeleinheit auszugleichen. Dadurch kann vorteilhaft eine ausgeglichene Druckbilanz innerhalb der Magnetventilvorrichtung bei einem Betrieb der Stößeleinheit erreicht werden. Insbesondere kann ein Druckunterschied auf verschiedenen Seiten der Stößeleinheit bei einer Bestimmung der Kräftebilanz des Magnetventils vorteilhaft vernachlässigt werden. Dadurch ist vorteilhaft eine geringe Magnetkraft für einen ordnungsgemäßen Betrieb der Stößeleinheit erforderlich. Dadurch kann vorteilhaft eine Magnetspulenwicklung besonders klein ausgelegt werden, wodurch Kosten und Bauraum vorteilhaft reduziert werden können. Das Druckausgleichselement ist insbesondere als eine durchgehende Ausnehmung, insbesondere als eine durchgehende Bohrung, durch die Stößeleinheit, insbesondere den Ankerstößel, ausgebildet, welche sich vorzugsweise zumindest im Wesentlichen parallel zu einer Längsrichtung der Stößeleinheit und/oder zu einer vorgesehenen Bewegungsrichtung der Stößeleinheit erstreckt. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Insbesondere ist denkbar, dass die Stößeleinheit mehr als ein Druckausgleichselement aufweist. Insbesondere ist das Druckausgleichselement dazu vorgesehen, einen Druckanschluss des Ventilteils mit zumindest einem weiteren Hohlraum des Ventilteils zu verbinden, welcher abgesehen von dem Druckausgleichselement abgedichtet ist zu dem Druckanschluss und/oder zu allen weiteren Anschlüssen des Ventilteils. Der Druckanschluss ist insbesondere zu einem Anschluss der Magnetventilvorrichtung an eine Druckleitung vorgesehen. Es ist denkbar, dass eine Mehrzahl an, beispielsweise miteinander verketteten Magnetventilvorrichtungen an eine identische Druckleitung angeschlossen sind.

Außerdem wird vorgeschlagen, dass die Stößeleinheit zumindest ein Rückstellelement aufweist, welches gegen den Magnetteil, insbesondere den Magnetkern des Magnetteils und/oder gegen ein den Magnetteil umgebendes Magnetteilgehäuse, abgestützt ist. Dadurch kann vorteilhaft eine effektive Ventilschaltung des Magnetventils ermöglicht werden. Zudem kann vorteilhaft ein stromloser Schaltzustand des Magnetventils erzeugt werden. Weiterhin kann durch eine direkte Abstützung gegen den Magnetteil eine kompakte Bauweise der Magnetventilvorrichtung erreicht werden. Das Rückstellelement ist insbesondere dazu vorgesehen, die Stößeleinheit nach einem Abschalten des Magnetfelds der Magneteinheit in einen Ruhezustand und/oder einen Ausgangszustand zurück auszulenken. Das Rückstellelement ist insbesondere dazu vorgesehen, eine Rückstellkraft zu erzeugen, welche, entgegen einer anziehend auf die Stößeleinheit wirkende, durch die Magnetspulenwicklung erzeugte Kraft wirkt. Zudem ist das Rückstellelement dazu vorgesehen, ein magnetisches Haften der Stößeleinheit an dem Magnetteil, beispielsweise durch eine zumindest teilweise Magnetisierung der Stößeleinheit, zu unterbinden. Es ist denkbar, dass die Magnetventilvorrichtung eine Mehrzahl an Rückstellelementen aufweist. Das Rückstellelement ist insbesondere als eine Feder, vorzugsweise eine Spiralfeder und bevorzugt eine Druckfeder, ausgebildet. Insbesondere kontaktiert das Rückstellelement den Magnetteil direkt. Alternativ ist vorstellbar, dass das Rückstellelement indirekt, also beispielsweise mittels eines zwischengeschalteten Kraftübertragungselements, gegen den Magnetteil abgestützt ist.

Weiterhin wird vorgeschlagen, dass das Rückstellelement zumindest teilweise innerhalb des Druckausgleichselements angeordnet ist. Dadurch kann vorteilhaft eine besonders kompakte Bauweise erreicht werden. Zudem kann vorteilhaft eine effektive und gleichmäßig verteilte Kraftübertragung zwischen dem Rückstellelement und der Stößeleinheit erfolgen. Insbesondere ist das Druckausgleichselement gegen zumindest eine Schulter und/oder gegen zumindest eine Auskragung innerhalb des Druckausgleichselements abgestützt. Insbesondere weist das Druckausgleichselement einen Abschnitt mit einem vergrößerten Querschnitt auf, innerhalb welchem das Rückstellelement eingebracht ist. Alternativ könnte das Druckausgleichselement einen gleichbleibenden oder auf der magnetteiligen Seite der Stößeleinheit kleiner werdenden Querschnitt aufweisen, wobei beispielsweise nach innen gerichtete Auskragungen entlang eines Umfangs angeordnet sind, mittels welchen das Rückstellelement gegen die Stößeleinheit abgestützt ist.

Ferner wird vorgeschlagen, dass der Magnetteil und der Ventilteil zumindest im Wesentlichen thermisch voneinander entkoppelt sind. Dadurch kann vorteilhaft eine Ausbildung einer Reibkrafthysterese, insbesondere einer temperaturabhängigen Reibkrafthysterese, reduziert oder bevorzugt vermieden werden. Insbesondere kann vorteilhaft verhindert werden, dass eine Magneterwärmung durch einen Betrieb der Magnetspulenwicklung direkt, insbesondere durch eine Kontaktwärmeleitung, auf eine Dichtung, insbesondere auf eine gleitende Dichtung, der Magnetventilvorrichtung übertragen wird. Dadurch kann vorteilhaft ein Reibwiderstand gering gehalten werden, wodurch eine maximal nötige Magnetkraft gering gehalten werden kann und wodurch vorteilhaft eine reduzierte Baugröße und reduzierte Kosten ermöglicht werden können. Darunter, dass zwei Bauteile "wesentlich thermisch voneinander entkoppelt" sind soll insbesondere verstanden werden, dass für ein Wärmefluss zwischen den beiden Bauteilen zumindest im Wesentlichen, insbesondere zumindest zu 66 %, vorzugsweise zumindest zu 75 % und bevorzugt zumindest zu 90 % eine Wärmestrahlung und/oder ein Fluid verantwortlich ist.

Zudem wird vorgeschlagen, dass der Ventilteil zumindest ein Gehäuse mit zumindest einem Druckanschluss, zumindest einem Arbeitsanschluss und/oder zumindest einem Entlüftungsanschluss umfasst, wobei der Druckanschluss zumindest mittels einer Dichtungsanordnung gegenüber dem Arbeitsanschluss und/oder dem Entlüftungsanschluss abgedichtet ist. Dadurch kann insbesondere eine vorteilhafte Ventilkonfiguration erreicht werden. Das Gehäuse ist insbesondere als ein Drehteil, insbesondere als ein Metalldrehteil, als ein Spritzgussteil, insbesondere ein Kunststoffspritzgussteil, oder als ein 3D-Druckteil ausgebildet. Insbesondere ist der Druckanschluss in zumindest einer Stellung der Stößeleinheit in dem Ventilteil gegen den Arbeitsanschluss abgedichtet. Insbesondere ist der Druckanschluss in zumindest einer Stellung der Stößeleinheit in dem Ventilteil gegen den Entlüftungsanschluss abgedichtet. Die Dichtungsanordnung ist insbesondere dazu vorgesehen, das Gehäuse und die Stößeleinheit druckdicht zu verbinden. Die Dichtungsanordnung ist insbesondere dazu vorgesehen, eine Abdichtung zwischen der Stößeleinheit und dem Gehäuse bei einer Bewegung der Stößeleinheit aufrechtzuerhalten. Die Dichtungsanordnung umfasst insbesondere eine gleitende Dichtung. Die gleitende Dichtung ist insbesondere als ein gefetteter O-Ring oder als ein speziell beschichtetes Elastomer ausgebildet. Alternativ ist die Dichtungsanordnung als eine hart-dichtende Dichtungsanordnung ausgebildet. Alternativ umfasst die Dichtungsanordnung zumindest einen insbesondere druckdichten Faltenbalg und/oder zumindest eine Membran-Dichtung.

Außerdem wird vorgeschlagen, dass zumindest eine Dichtung, insbesondere die gleitende Dichtung, der Dichtungsanordnung einen Dichtungsdurchmesser aufweist, welcher einem Wirkdurchmesser zumindest eines Ventilsitzes des Ventilteils, vorzugsweise aller Ventilsitze des Ventilteils, zumindest im Wesentlichen entspricht. Dadurch kann vorteilhaft eine druckausgleichende Konfiguration des Ventilteils ermöglicht werden. Insbesondere kann dadurch vorteilhaft ein Druckgefälle zwischen einem an dem Ventilsitz anliegendem Druck und einem an der Dichtung der Dichtungsanordnung anliegendem Druck auf einen Wert nahe null reduziert werden. Unter einem "Dichtungsdurchmesser" soll insbesondere ein Durchmesser, vorzugsweise ein Innendurchmesser der gleitenden Dichtung, insbesondere des Dichtungsrings, welcher das Gehäuse gegen die Stößeleinheit abdichtet, verstanden werden. Unter einem "Wirkdurchmesser" soll insbesondere ein minimaler Durchmesser einer Öffnung eines Ventilsitzes verstanden werden. Insbesondere ist die Dichtung der Dichtungsanordnung und die Öffnung des Ventilsitzes zumindest im Wesentlichen rund. Vorzugsweise weisen alle Ventilsitze des Ventilteils zumindest im Wesentlichen identische Wirkdurchmesser auf. Darunter, dass sich zwei Parameter "im Wesentlichen entsprechen", soll insbesondere verstanden werden, dass die zwei Parameter eine Differenz aufweisen, welche weniger als 5 %, vorzugsweise weniger als 3 % und bevorzugt weniger als 1 % eines Absolutwerts eines der Parameter beträgt.

Wenn die Dichtungsanordnung zumindest eine gleitende Dichtung umfasst, können vorteilhaft gute Dichteigenschaften bei gleichzeitig moderaten Kosten erreicht werden.

Des Weiteren wird vorgeschlagen, dass die gleitende Dichtung einen Dichtring umfasst, welcher zumindest zu einem Großteil aus einem Elastomer ausgebildet ist, wobei der Elastomer eine dünne, insbesondere eine Schichtdicke von weniger als 0,5 mm, bevorzugt weniger als 0,25 mm aufweisende, Schicht aus Polytetrafluorethylen (Teflon) aufweist. Dadurch kann vorteilhaft eine Magnetventilvorrichtung für ein druckausgeglichenes Magnetventil geschaffen werden, welche eine besonders verschleißresistente und/oder besonders reibungsarme und dennoch hoch dichtende gleitende Dichtung umfasst. Dadurch kann vorteilhaft eine hohe Lebensdauer erreicht werden. Vorteilhaft kann eine Reibkraft der Dichtung um 80 %reduziert werden. Zudem kann vorteilhaft eine Reibhysterese verringert werden. Des Weiteren kann vorteilhaft eine im Wesentlichen temperaturunabhängige Reibhysterese erreicht werden. Das Elastomer ist vorzugsweise als ein Kautschuk, insbesondere ein hydrierter Acrylnitrilbutadien-Kautschuk oder als ein Fluorkautschuk, ausgebildet. Insbesondere ist der Dichtring als ein Nutring mit einer, vorzugsweise V-förmigen, in Richtung einer Symmetrieachse des Nutrings geöffneten, rings um den Nutring verlaufenden, Vertiefung ausgebildet.

Zudem wird vorgeschlagen, dass zumindest der Magnetteil hermetisch umspritzt ist. Dadurch kann vorteilhaft eine Abschirmung des Magnetteils von einer Verschmutzung, insbesondere von einem potentiell korrosiven Druckfluid, welches in den Fluidleitungen des Ventilteils, insbesondere auch in dem Druckausgleichselement, geführt ist, ermöglicht werden. Dadurch kann vorteilhaft eine hohe Lebensdauer erreicht werden. Zudem kann vorteilhaft eine einfache Reinigung eines demontierten Magnetteils ermöglicht werden. Insbesondere bildet die hermetische Umspritzung ein vollständig abgeschlossenes, das Magnetteil umgebendes Magnetteilgehäuse aus. Insbesondere ist der Magnetteil mittels eines Kunststoffs hermetisch umspritzt. Unter der Wendung "hermetisch umspritzt" soll insbesondere vollständig und zumindest gegen Schmutzpartikel, vorzugsweise gegen Flüssigkeiten dichtend umspritzt verstanden werden. Insbesondere kann dadurch vorteilhaft eine Anwendung des Magnetteils unter feuchten Umgebungsbedingungen, beispielsweise in einem Außenbereich, z.B. Motorbereich, eines Fahrzeugs ermöglicht werden. Die hermetische Umspritzung weist eine Dicke von zumindest 1 mm, vorzugsweise zumindest 3 mm, bevorzugt zumindest 5 mm und besonders bevorzugt höchstens 20 mm auf.

Weiterhin wird vorgeschlagen, dass die Stößeleinheit die zumindest eine erste Ventildichtung und zumindest eine zweite Ventildichtung aufweist, welche insbesondere entlang einer Bewegungsachse der Stößeleinheit, insbesondere eines Ankerstößels der Stößeleinheit, von der ersten Ventildichtung beabstandet ist und/oder vorzugsweise von der ersten Ventildichtung getrennt ausgebildet ist, wobei die Ventildichtungen dazu vorgesehen sind, jeweils unterschiedliche Durchflusspfade durch das Magnetventil zu blockieren und/oder freizugeben. Vorteilhaft kann dadurch eine einfache Montage ermöglicht werden, insbesondere indem auf eine zusätzliche Gleitdichtung verzichtet werden kann. Vorteilhaft kann eine hohe Lebensdauer erreicht werden und/oder ein Verschleiß reduziert werden. Insbesondere sind die Ventildichtungen an unterschiedlichen Positionen entlang der Bewegungsachse der Stößeleinheit, insbesondere des Ankerstößels der Stößeleinheit, angeordnet. Insbesondere entspricht ein Abstand der Ventildichtungen entlang der Bewegungsachse zumindest einem Abstand der zwei am weitesten voneinander entfernten Ventilsitze aller durch die Stößeleinheit verschließbaren und/oder öffenbaren Ventilsitze der Magnetventileinheit. Insbesondere ist keiner der Ventilanschlüsse der Magnetventileinheit, insbesondere nicht der Druckanschluss, nicht der Arbeitsanschluss und/oder nicht der Entlüftungsanschluss, gleichzeitig durch die erste Ventildichtung und die zweite Ventildichtung verschließbar.

Außerdem wird ein druckausgeglichenes Magnetventil mit der Magnetventilvorrichtung vorgeschlagen, wobei das Magnetventil als 3/2 NO-("normally open")-Ventil, als 3/2 NC-("normally closed")-Ventil, als 2/2 NO-Ventil oder als 2/2 NC-Ventil ausgebildet ist. Dadurch kann insbesondere ein Ventil mit vorteilhaften Ventileigenschaften erreicht werden. Insbesondere kann der Ventilteil des Magnetventils beliebig gewechselt werden, um entweder ein 3/2 NO-Ventil, ein 3/2 NC-Ventil, ein 2/2 NO-Ventil oder ein 2/2 NC-Ventil zu erhalten, insbesondere wenn bei dem Wechsel des Ventilteils eine entsprechende Umordnung von Magnetventilanschlüssen des Magnetventils vorgenommen wird. Dadurch kann vorteilhaft eine hohe Flexibilität erreicht werden.

Zudem wird ein Magnetventilsystem mit einer Magnetventilvorrichtung vorgeschlagen, wobei das Magnetventilsystem eine Mehrzahl an zumindest teilweise unterschiedlich zueinander ausgebildeten, austauschbar mit dem Ventilteil koppelbaren und als separierbares Modul ausgebildeten, Magnetteilen aufweist, wobei die Magnetteile insbesondere unterschiedliche Magnetspulenwicklungen und/oder unterschiedliche elektrische Anschlussvorrichtungen und/oder elektrische Steuervorrichtungen aufweisen und/oder wobei das Magnetventilsystem einer Mehrzahl an zumindest teilweise unterschiedlich zueinander ausgebildeten, austauschbar mit dem Magnetteil koppelbaren und als separierbares Modul ausgebildeten, Ventilteilen aufweist, wobei die Ventilteile insbesondere unterschiedliche Gehäuse mit unterschiedlichen Zu- und/oder Ableitungen aufweisen. Dadurch kann vorteilhaft eine besonders effiziente Magnetkraftnutzung erreicht werden, insbesondere indem eine exakte Abstimmung und/oder Auslegung eines Magnetventils für ein bestimmtes System mittels einer entsprechenden Auswahl von miteinander kombinierten Modulen erreicht werden kann. Vorteilhaft kann zudem eine hohe Flexibilität erreicht werden. Insbesondere weisen die Magnetteile unterschiedliche Anschlussvorrichtungen auf, welche beispielsweise unterschiedliche Steckersysteme bzw. Steckervarianten aufweisen und/oder für unterschiedliche Spannungsquellen ausgelegt sind. Insbesondere weisen die Ventilteile unterschiedliche Durchflusspfade auf, welche sich beispielsweise in ihrem Querschnitt, insbesondere in ihrer maximal möglichen Durchflussmenge, in der Anzahl der Anschlüsse, insbesondere Zu- und/oder Abläufe, und/oder in der Art der stromlosen Nullstellung (NO/NC) unterscheiden. Beispielsweise umfasst das Magnetventilsystem Ventilteile, welche für eine Ausbildung von 3/2-NO-Magnetventilen, 3/2-NC-Magnetventilen, 2/2-NO-Magnetventilen oder 2/2-NC-Magnetventilen vorgesehen sind, insbesondere jeweils mit mehreren möglichen Dimensionierungen der Durchflussmengen.

Zudem werden das Magnetteil der Magnetventilvorrichtung und das Ventilteil der Magnetventilvorrichtung vorgeschlagen.

Des Weiteren wird ein Verfahren mit einer Magnetventilvorrichtung für ein druckausgeglichenes Magnetventil, mit einem Magnetventil und/oder mit einem Magnetventilsystem vorgeschlagen. Dadurch kann vorteilhaft eine besonders effiziente Magnetkraftnutzung erreicht werden.

Die erfindungsgemäße Magnetventilvorrichtung für ein druckausgeglichenes Magnetventil, das erfindungsgemäße druckausgeglichene Magnetventil, das erfindungsgemäße Magnetventilsystem und/oder das erfindungsgemäße Verfahren mit der Magnetventilvorrichtung soll/sollen hierbei nicht auf die oben beschriebene Anwendung und Ausführungsform beschränkt sein. Insbesondere kann die erfindungsgemäße Magnetventilvorrichtung für ein druckausgeglichenes Magnetventil, das erfindungsgemäße druckausgeglichene Magnetventil, das erfindungsgemäße Magnetventilsystem und/oder das erfindungsgemäße Verfahren mit der Magnetventilvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Schnittansicht eines Magnetventils mit einer Magnetventilvorrichtung,
- Fig. 2: eine schematische Schnittansicht eines Dichtrings einer gleitenden Dichtung der Magnetventilvorrichtung,
- Fig. 3: eine schematische Darstellung eines Magnetventilsystems zur Bildung verschiedener Magnetventile,
- Fig. 4: ein Ablaufdiagramm eines Verfahrens mit dem Magnetventil,
- Fig. 5: eine schematische Schnittansicht eines alternativen Magnetventils mit einer alternativen Magnetventilvorrichtung und
- Fig. 6: eine schematische Schnittansicht eines weiteren alternativen Magnetventils mit einer weiteren alternativen Magnetventilvorrichtung.

### Beschreibung der Ausführungsbeispiele

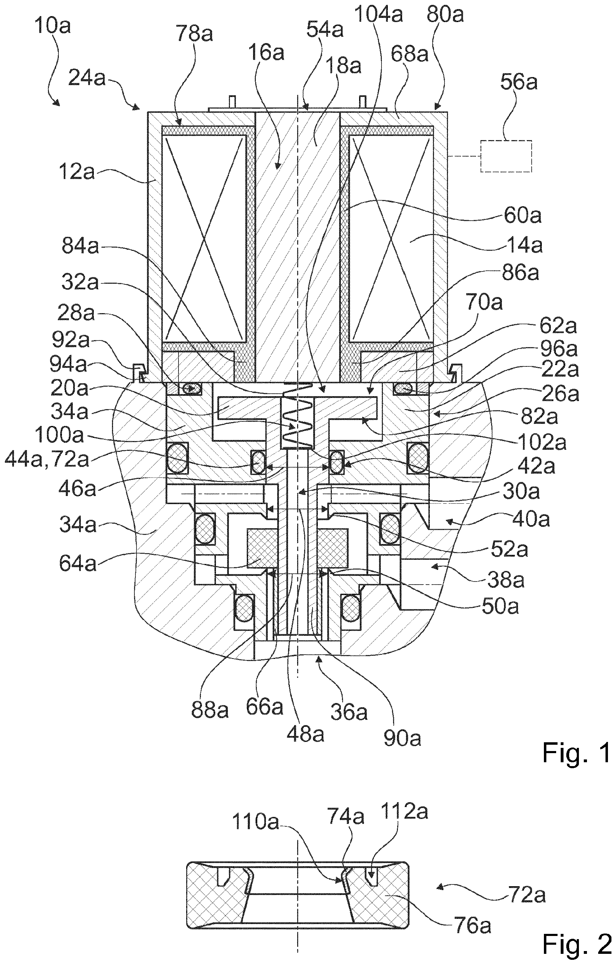

Fig. 1 zeigt ein Magnetventil 10a. Das Magnetventil 10a befindet sich in einem stromlosen Zustand. Das Magnetventil 10a ist als ein druckausgleichendes Magnetventil ausgebildet. Das Magnetventil 10a ist als ein 3/2-Wegeventil ausgebildet. Das Magnetventil 10a weist eine druckausgleichende Magnetventilvorrichtung auf. Die Magnetventilvorrichtung weist einen Magnetteil 12a auf. Der Magnetteil 12a ist zu einer Erzeugung und/oder einer Steuerung eines Magnetfelds vorgesehen. Der Magnetteil 12a bildet ein unabhängig funktionsfähiges Modul 24a aus. Der Magnetteil 12a ist frei von beweglich gelagerten Komponenten.

Der Magnetteil 12a weist eine Magnetspulenwicklung 14a auf. Die Magnetspulenwicklung 14a ist als eine Zylinderspulenwicklung ausgebildet. Die Magnetspulenwicklung 14a bildet ein Solenoid 78a aus. Die Magnetspulenwicklung 14a bildet eine elektromagnetische Spule aus. Der Magnetteil 12a weist einen Wicklungsträger 60a auf. Der Wicklungsträger 60a ist aus einem nichtleitenden und/oder nichtmagnetisierbaren Kunststoff ausgebildet. Die Magnetspulenwicklung 14a ist um den Wicklungsträger 60a gewickelt. Die Magnetspulenwicklung 14a und/oder das Solenoid 78a umfasst ein Inneres 16a. Das Innere 16a der Magnetspulenwicklung 14a weist einen Magnetkern 18a auf. Der Magnetkern 18a bildet einen teilweise unterbrochenen Eisenkreis aus. Der Magnetkern 18a ist zumindest in einem Zentrum des Solenoid 78a angeordnet. Alternativ kann das Innere 16a der Magnetspulenwicklung 14a und/oder der gesamte Magnetteil 12a frei von einem Magnetkern 18a ausgebildet sein. Der Magnetteil 12a umfasst einen Magnetkreis 80a. Der Magnetkreis 80a ist zumindest teilweise aus einem ferromagnetischen und/oder einem weichmagnetischen Material, insbesondere aus Eisen, ausgebildet. Der Magnetkreis 80a umfasst den Magnetkern 18a. Der Magnetkreis 80a umfasst einen Magnetbügel 68a. Der Magnetbügel 68a umschließt die Magnetspulenwicklung 14a zumindest teilweise. Der Magnetkreis 80a, insbesondere der Magnetbügel 68a, kann alternativ oder zusätzlich zumindest teilweise als ein rundes Magnetgehäuse ausgebildet sein. Der Magnetkreis 80a umfasst ein Magnetjoch 62a. Das Magnetjoch 62a umschließt die Magnetspulenwicklung 14a zumindest teilweise. Die Komponenten 18a, 62a, 68a des Magnetkreises 80a sind als voneinander getrennte Elemente ausgebildet. Alternativ könnten die Komponenten 18a, 62a, 68a des Magnetkreises 80a einstückig zueinander ausgebildet sein. Der Magnetkreis 80a ist als ein offener Magnetkreis ausgebildet. Der Magnetkreis 80a weist einen Spalt 84a auf. Der Magnetkreis 80a weist einen weiteren Spalt 86a auf. Der Spalt 84a des Magnetkreises 80a ist zumindest teilweise von dem Wicklungsträger 60a aufgefüllt. Der weitere Spalt 86a des Magnetkreises 80a ist zumindest teilweise von dem Wicklungsträger 60a aufgefüllt. Die Spalte 84a, 86a erzeugt in Kombination mit dem Eisenkreis des Magnetkreises 80a eine Induktivität des Magnetkreises 80a. Der Magnetteil 12a weist eine Anschlussvorrichtung 54a auf. Die Anschlussvorrichtung 54a bildet eine Steckerverbindung aus. Die Anschlussvorrichtung 54a ist zu einem elektrischen Anschluss der Magnetspulenwicklung 14a vorgesehen.

Die Magnetventilvorrichtung weist eine Steuervorrichtung 56a auf. Die Steuervorrichtung 56a ist zu einer Steuerung einer Stromversorgung des Magnetteils 12a vorgesehen. Die Steuervorrichtung 56a ist zu einer Steuerung eines Magnetfelds der Magnetspulenwicklung 14a vorgesehen. Die Steuervorrichtung 56a ist zu einer Steuerung des Magnetventils 10a mittels des Magnetfelds der Magnetspulenwicklung 14a vorgesehen.

Die Magnetventilvorrichtung weist einen Ventilteil 22a auf. Der Ventilteil 22a bildet ein unabhängig funktionsfähiges Modul 26a aus. Der Ventilteil 22a weist eine Stößeleinheit 20a auf. Die Stößeleinheit 20a ist dazu vorgesehen, einen Durchflusspfad durch das Magnetventil 10a zu steuern. Die Stößeleinheit 20a ist dazu vorgesehen, mit einem innerhalb des Magnetteils 12a erzeugten Magnetfeld wechselzuwirken. Die Wechselwirkung der Stößeleinheit 20a mit dem Magnetfeld des Magnetteils 12a ist zu einer Erzeugung einer Bewegung der Stößeleinheit 20 vorgesehen. Die Stößeleinheit 20a ist dazu vorgesehen, sich bei einer Aktivierung des Magnetfelds auf den Magnetteil 12a zuzubewegen. Die Stößeleinheit 20a ist dazu vorgesehen, mittels einer Bewegung in Richtung der Spalte 84a, 86a des Magnetkreises 80a des Magnetteils 12a die Induktivität des Magnetkreises 80a zu minimieren. Die Stößeleinheit 20a wird bei einer Aktivierung des Magnetfelds des Magnetteils 12a von dem Magnetfeld in Richtung der Spalte 84a, 86a gezogen.

Der Ventilteil 22a weist ein Gehäuse 34a auf. Das Gehäuse 34a bildet ein Ventilgehäuse aus. Die Stößeleinheit 20a ist in dem Gehäuse 34a beweglich gelagert. Das Gehäuse 34a ist mehrteilig ausgebildet. Separat ausgebildete Teileinheiten des Gehäuses 34a sind druckdicht abgedichtet. Alternativ könnte das Gehäuse 34 einteilig ausgebildet sein. Der Ventilteil 22a umfasst ein Führungselement 66a. Das Führungselement 66a ist zu einer Führung der Stößeleinheit 20a innerhalb des Ventilteils 22a vorgesehen. Das Gehäuse 34a weist einen Druckanschluss 36a auf. Der Druckanschluss 36a ist als eine Gehäuseöffnung ausgebildet. Der Druckanschluss 36a ist auf einer dem Magnetteil 12a abgewandten Seite der montierten Magnetventilvorrichtung angeordnet. Das Gehäuse 34a weist einen Arbeitsanschluss 38a auf. Der Arbeitsanschluss 38a ist als eine Gehäuseöffnung ausgebildet. Das Gehäuse 34a weist einen Entlüftungsanschluss 40a auf. Der Entlüftungsanschluss 40a ist als eine Gehäuseöffnung ausgebildet. Der Ventilteil 22a weist eine Dichtungsanordnung 42a auf. Der Druckanschluss 36a ist mittels der Dichtungsanordnung 42a gegenüber dem Arbeitsanschluss 38a abgedichtet. Der Druckanschluss 36a ist mittels der Dichtungsanordnung 42a gegenüber dem Entlüftungsanschluss 40a abgedichtet. Die Dichtungsanordnung 42a weist eine Dichtung 44a auf. Die Dichtung 44a der Dichtungsanordnung 42a ist als eine gleitende Dichtung 72a ausgebildet. Die Dichtung 44a der Dichtungsanordnung 42a weist einen Dichtungsdurchmesser 46a auf.

Die Magnetventilvorrichtung weist eine Ventildichtung 64a auf. Die Ventildichtung 64a ist dazu vorgesehen, bestimmte Durchflusspfade zu verschließen oder freizugeben. Der Ventilteil 22a weist einen ersten Ventilsitz 50a auf. Die Ventildichtung 64a ist dazu vorgesehen, dichtend auf den ersten Ventilsitz 50a aufzusitzen. Bei einem dichtenden Aufsitzen der Ventildichtung 64a auf dem ersten Ventilsitz 50a ist der Druckanschluss 36a geschlossen. Bei einem dichtenden Aufsitzen der Ventildichtung 64a auf dem ersten Ventilsitz 50a ist ein Pfad zwischen dem Arbeitsanschluss 38a und dem Entlüftungsanschluss 40a geöffnet. Der erste Ventilsitz 50a weist einen Wirkdurchmesser 48a auf. Der Wirkdurchmesser 48a des ersten Ventilsitzes 50a entspricht zumindest im Wesentlichen dem Dichtungsdurchmesser 46a der Dichtung 44a der Dichtungsanordnung 42a.

Der Ventilteil 22a weist einen zweiten Ventilsitz 52a auf. Bei einem dichtenden Aufsitzen der Ventildichtung 64a auf dem zweiten Ventilsitz 52a ist der Entlüftungsanschluss 40a geschlossen. Bei einem dichtenden Aufsitzen der Ventildichtung 64a auf dem zweiten Ventilsitz 52a ist ein Durchflusspfad zwischen dem Arbeitsanschluss 38a und dem Druckanschluss 36a geöffnet. Der erste Ventilsitz 50a ist in der in Fig. 1 gezeigten Konfiguration des Magnetventils 10a in dem stromlosen Zustand besetzt. Der zweite Ventilsitz 52a ist in der in Fig. 1 gezeigten Konfiguration des Magnetventils 10a in dem stromlosen Zustand unbesetzt. Der zweite Ventilsitz 52a weist einen Wirkdurchmesser 88a auf. Der Wirkdurchmesser 88a des zweiten Ventilsitzes 52a entspricht zumindest im Wesentlichen dem Wirkdurchmesser 48a des ersten Ventilsitzes 50a. Der Wirkdurchmesser 88a des zweiten Ventilsitzes 52a entspricht zumindest im Wesentlichen dem Dichtungsdurchmesser 46a der Dichtung 44a der Dichtungsanordnung 42a.

In der in Fig. 1 gezeigten Konfiguration bildet das Magnetventil 10a ein 3/2-NC-Magnetventil aus. Alternativ könnte das Magnetventil 10a bei einer Vertauschung von Druckanschluss 36a und Entlüftungsanschluss 40a ein 3/2-NO-Magnetventil ausbilden. Alternativ könnte das Magnetventil 10a bei einem Verschließen des Entlüftungsanschlusses 40a ein 2/2-NC-Magnetventil ausbilden. Alternativ könnte das Magnetventil 10a bei einem Verschließen des Druckanschlusses 36a und bei einem Vertauschen des Arbeitsanschlusses 38a und des Entlüftungsanschlusses 40a und/oder bei einem Verschließen des Entlüftungsanschlusses 40a ein 2/2-NO-Magnetventil ausbilden.

Die Stößeleinheit 20a weist einen Ankerstößel 90a auf. Der Ankerstößel 90a ist aus einem ferromagnetischen und/oder einem weichmagnetischen Material ausgebildet. Der Ankerstößel 90a ist einstückig ausgebildet. Alternativ könnte der Ankerstößel 90a mehrteilig ausgebildet sein. Die Stößeleinheit 20a weist die Ventildichtung 64a auf. Die Ventildichtung 64a ist auf den Ankerstößel 90a aufgepresst. Die Stößeleinheit 20a bildet einen Flachanker 70a aus. Der Ankerstößel 90a bildet den Flachanker 70a aus. Der Flachanker 70a weist einen scheibenförmigen Endbereich 82a auf. Der scheibenförmige Endbereich 82a ist auf einer dem Magnetteil 12a zugewandten Seite des Ankerstößels 90a angeordnet. Der scheibenförmige Endbereich 82a ist in einem Nahbereich der Spalte 84a, 86a des Magnetkreises 80a des Magnetteils 12a angeordnet. Durch die Induktivität der Spalte 84a, 86a wird der scheibenförmige Endbereich 82a des Ankerstößels 90a bei einer Bestromung der Magnetspulenwicklung 14a in Richtung des Magnetteils 12a gezogen.

Die Stößeleinheit 20a weist ein Druckausgleichselement 30a auf. Das Druckausgleichselement 30a ist als eine Bohrung im Zentrum der Stößeleinheit 20a, insbesondere des Ankerstößels 90a, ausgebildet. Das Druckausgleichselement 30a ist dazu vorgesehen, auf der dem Magnetteil 12a zugewandten Seite der Stößeleinheit 20a einen zumindest im Wesentlichen identischen Druck einzustellen wie auf der dem Druckanschluss 36a zugewandten Seite.

Die Stößeleinheit 20a weist ein Rückstellelement 32a auf. Das Rückstellelement 32a ist als eine Druckfeder ausgebildet. Das Rückstellelement 32a ist gegen den Magnetteil 12a abgestützt. Das Rückstellelement 32a ist direkt gegen den Magnetkern 18a des Magnetteils 12a abgestützt. Das Rückstellelement 32a ist dazu vorgesehen, die Stößeleinheit 20a von dem Magnetteil 12a wegzudrücken. Das Rückstellelement 32a ist teilweise innerhalb des Druckausgleichselements 30a angeordnet. Das Druckausgleichselement 30a weist einen Aufnahmebereich 100a auf. Der Aufnahmebereich 100a des Druckausgleichselements 30a ist als eine abschnittsweise Verbreiterung des Druckausgleichselements 30a ausgebildet. Der Aufnahmebereich 100a des Druckausgleichselements 30a bildet eine Schulter 102a aus. Das Rückstellelement 32a ist gegen die Schulter 102a des Druckausgleichselements 30a abgestützt.

Der Magnetteil 12a und der Ventilteil 22a bilden separierbare Module 24a, 26a aus. Der Magnetteil 12a und der Ventilteil 22a bilden unabhängig voneinander funktionsfähige Module 24a, 26a aus. Die durch den Magnetteil 12a und den Ventilteil 22a gebildeten Module 24a, 26a sind frei von gemeinsamen funktionellen Bauteilen. Der Ventilteil 22a ist zumindest im Wesentlichen frei von in zumindest einem Betriebszustand in den Magnetteil 12a zumindest teilweise eingreifenden Komponenten. Der Magnetteil 12a ist zumindest im Wesentlichen frei von in zumindest einem Betriebszustand in den Ventilteil 22a zumindest teilweise eingreifenden Komponenten.

Der Magnetteil 12a und der Ventilteil 22a sind miteinander koppelbar. Der Magnetteil 12a und der Ventilteil 22a sind miteinander unverlierbar koppelbar. In der in der Fig. 1 gezeigten Konfiguration ist der Magnetteil 12a mit dem Ventilteil 22a, insbesondere unverlierbar, gekoppelt. Das mit dem Ventilteil 22a gekoppelte, durch das Magnetteil 12a gebildete, Modul 24a ist zerstörungsfrei von dem Ventilteil 22a entkoppelbar. Der Magnetteil 12a und der Ventilteil 22a sind zumindest im Wesentlichen thermisch voneinander entkoppelt. Der Magnetteil 12a und der Ventilteil 22a sind in einem miteinander gekoppelten Zustand zumindest im Wesentlichen thermisch voneinander entkoppelt. Der Ventilteil 22a weist eine Dichtungs- und Montagevorrichtung 28a auf. Der Magnetteil 12a weist die Dichtungs- und Montagevorrichtung 28a auf. Die Dichtungs- und Montagevorrichtung 28a ist dazu vorgesehen, eine Kopplung des durch den Ventilteil 22a gebildeten Moduls 26a und des durch den Magnetteil 12a gebildeten Moduls 24a herzustellen. Die Dichtungs- und Montagevorrichtung 28a weist korrespondierende Koppelelemente 92a, 94a auf. Ein Koppelelement 92a der Dichtungs- und Montagevorrichtung 28a ist dem Ventilteil 22a zugeordnet. Ein weiteres Koppelelement 94a ist dem Magnetteil 12a zugeordnet. Die korrespondierenden Koppelelemente 92a, 94a bilden eine Formschlussverbindung aus. Die Dichtungs- und Montagevorrichtung 28a bildet eine lösbare, unverlierbare und dichte Kopplung des Magnetteils 12a mit dem Ventilteil 22a aus. Die Dichtungs- und Montagevorrichtung 28a weist ein Dichtelement 96a auf. Das Dichtelement 96a ist dazu vorgesehen, eine druckdichte Kopplung zwischen dem Magnetteil 12a und dem Ventilteil 22a herzustellen. Das Dichtelement 96a ist dazu vorgesehen, einen Hohlraum 104a des Ventilteils 22a, welcher über das Druckausgleichselement 30a mit dem Druckanschluss 36a verbunden ist, durch ein Anliegen an dem Magnetteil 12a druckdicht nach außen abzudichten.

Fig. 2 zeigt einen schematischen Schnitt durch einen Dichtring 76a der gleitenden Dichtung 72a. Die gleitende Dichtung 72a umfasst den Dichtring 76a. Der Dichtring 76a ist aus einem Elastomer ausgebildet. Der Dichtring 76a weist eine Oberflächenbeschichtung 110a auf. Die Oberflächenbeschichtung 110a bildet eine dünne Schicht 74a aus. Die dünne Schicht 74a ist aus einem Polytetrafluorethylen ausgebildet. Die dünne Schicht 74a ist dazu vorgesehen, eine Oberflächenreibung der gleitenden Dichtung 72a zu verringern. Die dünne Schicht 74a ist dazu vorgesehen, eine Widerstandsfähigkeit der gleitenden Dichtung 72a gegen Verschleiß zu erhöhen. Der Dichtring 76a weist eine V-förmige Nut 112a auf. Die Nut 112a ist dazu vorgesehen, dynamische Eigenschaften des Dichtrings 76a bei einer Bewegung der Stößeleinheit 20a vorteilhaft zu verbessern.

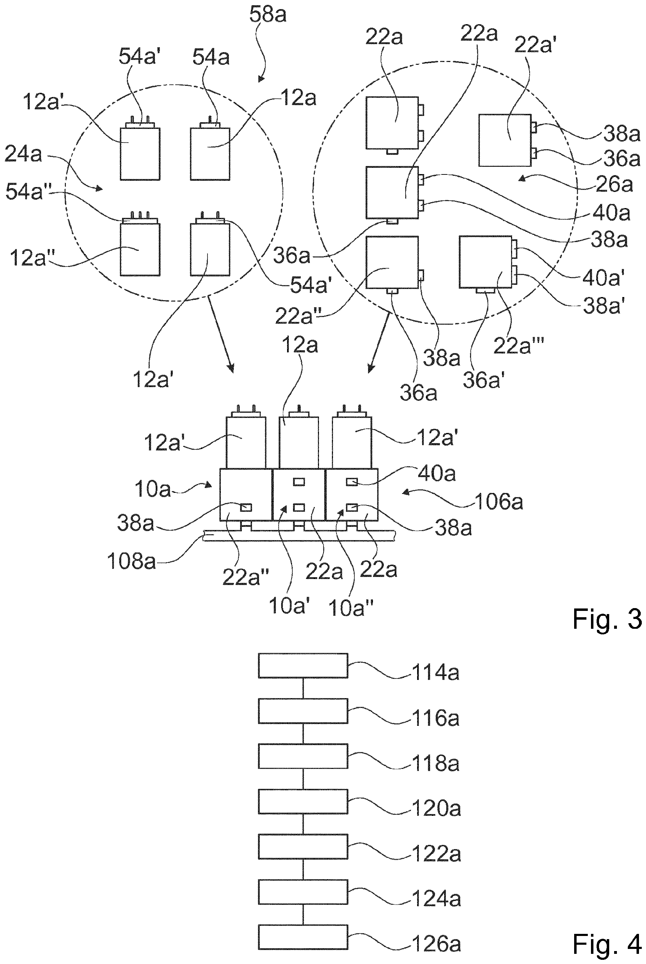

Fig. 3 zeigt ein Magnetventilsystem 58a mit der Magnetventilvorrichtung. Das Magnetventilsystem 58a bildet ein Baukastensystem, insbesondere ein Magnetventil-Baukastensystem, aus. Das Magnetventilsystem 58a umfasst eine Mehrzahl an Magnetteilen 12a, 12a', 12a" welche jeweils eigenständige Module 24a ausbilden. Die Magnetteile 12a, 12a', 12a" des Magnetventilsystems 58a sind unterschiedlich zueinander ausgebildet. Die unterschiedlich zueinander ausgebildeten Magnetteile 12a, 12a', 12a" weisen unterschiedliche Anschlussvorrichtungen 54a, 54a', 54a" auf. Zumindest ein Teil der Magnetteile 12a, 12a', 12a" des Magnetventilsystems 58a sind identisch zueinander ausgebildet. Das Magnetventilsystem 58a umfasst eine Mehrzahl an Ventilteilen 22a, 22a', 22a", 22a‴, welche jeweils eigenständige Module 26a ausbilden. Die Ventilteile 22a, 22a', 22a", 22a‴ des Magnetventilsystems 58a sind unterschiedlich zueinander ausgebildet. Die unterschiedlich zueinander ausgebildeten Ventilteile 22a, 22a', 22a", 22a‴ weisen unterschiedliche Anordnungen und/oder Dimensionierungen von Arbeitsanschlüssen 38a, 38a', Druckanschlüssen 36a, 36a' und/oder Entlüftungsanschlüssen 40a, 40a' auf. Zumindest ein Teil der Ventilteile 22a, 22a', 22a", 22a‴ des Magnetventilsystems 58a sind identisch zueinander ausgebildet. Die Magnetteile 12a, 12a', 12a" des Magnetventilsystems 58a sind austauschbar mit den Ventilteilen 22a, 22a', 22a", 22a‴ koppelbar. Beliebige Magnetteile 12a, 12a', 12a" sind mit beliebigen Ventilteilen 22a, 22a', 22a", 22a‴ des Magnetventilsystems 58a koppelbar. Jeweils ein Magnetteil 12a, 12a', 12a" und ein mit dem Magnetteil 12a, 12a', 12a" gekoppeltes Ventilteil 22a, 22a', 22a", 22a‴ bilden ein Magnetventil 10a, 10a', 10a" aus. Die Ventilteile 22a, 22a', 22a", 22a‴ und die Magnetteile 12a, 12a', 12a" der Magnetventile 10a, 10a', 10a" sind zerstörungsfrei entkoppelbar und/oder austauschbar. Magnetventile 10a, 10a', 10a" sind miteinander zu einer Ventilkette 106a koppelbar. Die Druckanschlüsse 36a der Magnetventile 10a der in Fig. 3 beispielhaft gezeigten Ventilkette 106a sind mit einer gemeinsamen Druckleitung 108a verbunden.

Fig. 4 zeigt ein Ablaufdiagramm eines Verfahrens mit der Magnetventilvorrichtung für das druckausgeglichene Magnetventil 10a. In zumindest einem Verfahrensschritt 114a wird eine Auswahl eines Magnetteils 12a und eines Ventilteils 22a für eine Kopplung zu einem Magnetventil 10a getroffen. In zumindest einem weiteren Verfahrensschritt 116a wird das gewählte Magnetteil 12a mittels der Dichtungs- und Montagevorrichtung 28a mit dem gewählten Ventilteil 22a verbunden. Die in dem Verfahrensschritt 116a erzeugte Verbindung zwischen dem Magnetteil 12a und dem Ventilteil 22a ist lösbar. Die in dem Verfahrensschritt 116a erzeugte Verbindung zwischen dem Magnetteil 12a und dem Ventilteil 22a ist druckdicht. Die in dem Verfahrensschritt 116a erzeugte Verbindung zwischen dem Magnetteil 12a und dem Ventilteil 22a verbindet den Magnetteil 12a und den Ventilteil 22a unverlierbar miteinander. Bei der Verbindung des Magnetteils 12a und des Ventilteils 22a miteinander werden die korrespondierenden Koppelelemente 92a, 94a in einen formschlüssigen Eingriff miteinander gebracht. In zumindest einem weiteren Verfahrensschritt 118a wird die Stößeleinheit 20a des gekoppelten Ventilteils 22a durch ein von der Magnetspulenwicklung 14a des Magnetteils 12a erzeugtes Magnetfeld zu einer Schaltung des Magnetventils 10a bewegt. In dem Verfahrensschritt 118a wird die Stößeleinheit 20a von dem Magnetfeld in Richtung des Magnetteils 12a gezogen. In zumindest einem weiteren Verfahrensschritt 120a wird die Stößeleinheit 20a von dem Rückstellelement 32a rückausgelenkt. In dem Verfahrensschritt 120a wird die Stößeleinheit 20a durch das Rückstellelement 32a von dem Magnetteil 12a weggedrückt. In zumindest einem weiteren Verfahrensschritt 122a wird der Magnetteil 12a von dem Ventilteil 22a zerstörungsfrei entkoppelt. In zumindest einem weiteren Verfahrensschritt 124a wird das Magnetteil 12a durch ein von dem Magnetteil 12a verschiedenes weiteres Magnetteil 12a, 12a', 12a" ausgetauscht und/oder das Ventilteil 22a durch ein von dem Ventilteil 22a verschiedenes weiteres Ventilteil 22a, 22a', 22a", 22a‴ ausgetauscht. In zumindest einem weiteren Verfahrensschritt 126a wird das ausgetauschte weitere Magnetteil 12a, 12a', 12a" mit dem verbleibenden Ventilteil 22a gekoppelt und/oder das ausgetauschte weitere Ventilteil 22a, 22a', 22a", 22a‴ mit dem verbleibenden Magnetteil 12a gekoppelt.

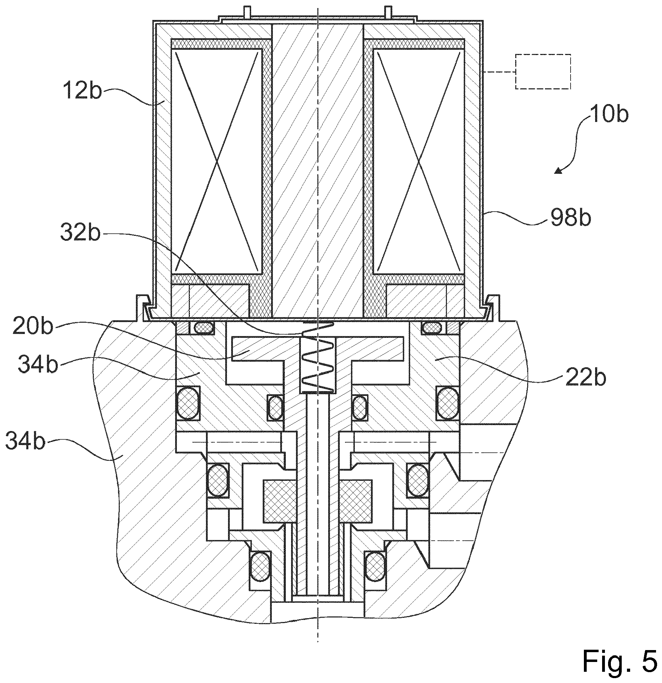

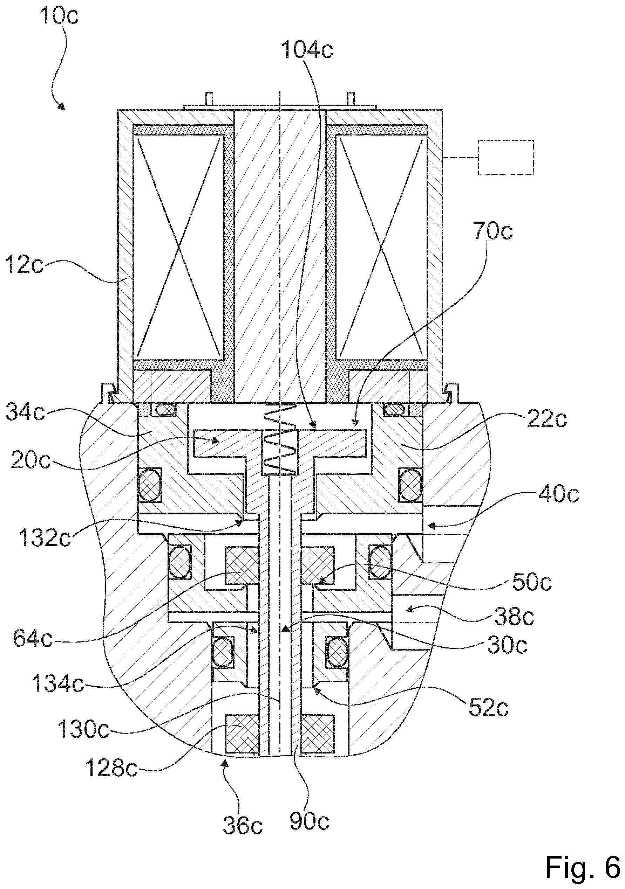

In den Figuren 5 und 6 sind zwei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 und 6 ist der Buchstabe a durch die Buchstaben b und c ersetzt.

Fig. 5 zeigt ein alternatives Magnetventil 10b mit einer alternativen Magnetventilvorrichtung. Die Magnetventilvorrichtung weist ein Magnetteil 12b und ein Ventilteil 22b auf. Der Magnetteil 12b ist hermetisch umspritzt. Der Magnetteil 12b weist ein Magnetteilgehäuse 98b auf. Die hermetische Umspritzung des Magnetteils 12b bildet das Magnetteilgehäuse 98b auf. Das Magnetteilgehäuse 98b ist dazu vorgesehen, den Magnetteil 12b von äußeren Einflüssen, beispielsweise Schmutz oder Feuchtigkeit, abzuschirmen. Der Ventilteil 22b weist ein Gehäuse 34b auf. Das Gehäuse 34b des Ventilteils 22b und das Magnetteilgehäuse 98b sind zur Ausbildung des Magnetventils 10b miteinander verbunden. Der Ventilteil 22b weist eine Stößeleinheit 20b auf. Die Stößeleinheit 20b ist dazu vorgesehen, mittels eines Magnetfelds des Magnetteils 12b zu einer Betätigung des Magnetventils 10b bewegt zu werden. Der Ventilteil 22b weist ein Rückstellelement 32b auf. Das Rückstellelement 32b ist dazu vorgesehen, die Stößeleinheit 20b bei einer Abschaltung des Magnetfelds des Magnetteils 12b in einen Ausgangszustand rückauszulenken. Das Rückstellelement 32b ist an dem Magnetteilgehäuse 98b abgestützt. Das Magnetteilgehäuse 98b weist eine geringe Dicke von wenigen Millimetern auf. Das Magnetteilgehäuse 98b beeinflusst eine Übertragung des Magnetfelds von dem Magnetteil 12b zu der Stößeleinheit 20b nur geringfügig, insbesondere ist eine Magnetfeldstärke an dem Ort der Stößeleinheit 20b um weniger als 5 %, vorzugsweise um weniger als 3 % und bevorzugt um weniger als 1 % geringer als eine Magnetfeldstärke eines identischen Magnetteils 12b, welcher kein Magnetteilgehäuse 98b aufweist.

Fig. 6 zeigt ein weiteres alternatives Magnetventil 10c mit einer weiteren alternativen Magnetventilvorrichtung. Die Magnetventilvorrichtung weist ein Magnetteil 12c und ein Ventilteil 22c auf. Der Ventilteil 22c weist eine Stößeleinheit 20c auf. Die Stößeleinheit 20c ist dazu vorgesehen, mittels eines Magnetfelds des Magnetteils 12c zu einer Betätigung des Magnetventils 10c bewegt zu werden. Die Stößeleinheit 20c weist einen Ankerstößel 90c auf. Der Ankerstößel 90c bildet einen Flachanker 70c aus. Die Magnetventilvorrichtung weist eine erste Ventildichtung 64c auf. Die Stößeleinheit 20c weist die erste Ventildichtung 64c auf. Die erste Ventildichtung 64c ist auf den Ankerstößel 90c aufgepresst. Die Magnetventilvorrichtung weist eine zweite Ventildichtung 128c auf. Die Stößeleinheit 20c weist die zweite Ventildichtung 128c auf. Die zweite Ventildichtung 128c ist auf den Ankerstößel 90c aufgepresst. Die erste Ventildichtung 64c ist entlang einer Bewegungsachse 130c der Stößeleinheit 20c von der zweiten Ventildichtung 128c beabstandet. Die erste Ventildichtung 64a ist, in Richtung des Magnetteils 12c gesehen, hinter der zweiten Ventildichtung 128c angeordnet. Die erste Ventildichtung 64c ist zwischen der zweiten Ventildichtung 128c und dem Magnetteil 12c angeordnet. Die erste Ventildichtung 64c ist räumlich getrennt von der zweiten Ventildichtung 128c ausgebildet. Die erste Ventildichtung 64c und die zweite Ventildichtung 128c sind, abgesehen von dem Ankerstößel 90c, frei von einem gemeinsamen Trägerelement. Die erste Ventildichtung 64c ist mit der zweiten Ventildichtung 128c mitbewegt und umgekehrt. Die erste Ventildichtung 64c und die zweite Ventildichtung 128c sind dazu vorgesehen, unterschiedliche Durchflusspfade durch die Magnetventilvorrichtung zu blockieren und/oder freizugeben. Der Ventilteil 22c weist einen ersten Ventilsitz 50c auf.

Der Ventilteil 22a weist ein Gehäuse 34c auf. Das Gehäuse 34c weist einen Druckanschluss 36c auf. Der Druckanschluss 36c ist in einem Nahbereich der zweiten Ventildichtung 128c und/oder eines zweiten Ventilsitzes 52c angeordnet. Das Gehäuse 34c weist einen Arbeitsanschluss 38c auf. Der Arbeitsanschluss 38c ist in einem Zwischenbereich 134c zwischen der ersten Ventildichtung 64c und der zweiten Ventildichtung 128c angeordnet. Das Gehäuse 34c weist einen Entlüftungsanschluss 40c auf. Der Entlüftungsanschluss 40c ist in einem Nahbereich der ersten Ventildichtung 64c, des ersten Ventilsitzes 50c und/oder eines dritten Ventilsitzes 132c angeordnet. Die erste Ventildichtung 64c ist dazu vorgesehen, in zumindest einem Betriebszustand dichtend auf dem ersten Ventilsitz 50c aufzusitzen. Die zweite Ventildichtung 128c sitzt in keinem Betriebszustand der Magnetventilvorrichtung aus Fig. 6 auf dem ersten Ventilsitz 50c auf. Bei einem dichtenden Aufsitzen der ersten Ventildichtung 64c auf dem ersten Ventilsitz 50c ist in der Ausgestaltung von Fig. 6 der Entlüftungsanschluss 40c geschlossen. Bei einem dichtenden Aufsitzen der ersten Ventildichtung 64c auf dem ersten Ventilsitz 50c ist ein Durchflusspfad zwischen dem Arbeitsanschluss 38c und dem Druckanschluss 36c geöffnet. Der Ventilteil 22c weist den zweiten Ventilsitz 52c auf. Die zweite Ventildichtung 128c ist dazu vorgesehen, in zumindest einem Betriebszustand dichtend auf dem zweiten Ventilsitz 52c aufzusitzen. Die erste Ventildichtung 64c sitzt in keinem Betriebszustand der Magnetventilvorrichtung aus Fig. 6 dichtend auf dem zweiten Ventilsitz 52c auf. Bei einem dichtenden Aufsitzen der zweiten Ventildichtung 128c auf dem zweiten Ventilsitz 52c ist in der Ausgestaltung von Fig. 6 der Druckanschluss 36c geschlossen. Bei einem dichtenden Aufsitzen der zweiten Ventildichtung 128c auf dem zweiten Ventilsitz 52c ist ein Durchflusspfad zwischen dem Arbeitsanschluss 38c und dem Entlüftungsanschluss 40c geöffnet.

Der Ventilteil 22c weist den dritten Ventilsitz 132c auf. Die erste Ventildichtung 64c ist dazu vorgesehen, in zumindest einem Betriebszustand dichtend auf dem dritten Ventilsitz 132c aufzusitzen. Die zweite Ventildichtung 128c sitzt in keinem Betriebszustand der Magnetventilvorrichtung aus Fig. 6 auf dem dritten Ventilsitz 132c auf. Bei einem dichtenden Aufsitzen der ersten Ventildichtung 64c auf dem dritten Ventilsitz 132c ist in der Ausgestaltung von Fig. 6 eine Verbindung zumindest des Entlüftungsanschlusses 40c und/oder zumindest des Arbeitsanschlusses 38c zu einem magnetteilseitigen Hohlraum 104c, in welchem insbesondere der Flachanker 70c angeordnet ist, geschlossen. Der Hohlraum 104c ist vorteilhaft über ein Druckausgleichselement 30c der Stößeleinheit 20c mit dem Druckanschluss 36c verbunden und/oder zu dem Druckanschluss 36c hin geöffnet. Bei einem dichtenden Aufsitzen der ersten Ventildichtung 64c auf dem dritten Ventilsitz 132c ist ein Durchflusspfad zwischen dem Arbeitsanschluss 38c und dem Entlüftungsanschluss 40c geöffnet. Wenn die erste Ventildichtung 64c auf dem dritten Ventilsitz 132c aufsitzt, ist der erste Ventilsitz 50c frei von der ersten Ventildichtung 64c, d.h. geöffnet, und umgekehrt. Die Ausgestaltung von Fig. 6 ist frei von einer gleitenden Dichtung, insbesondere einer entlang der Stößeleinheit 20c gleitenden Dichtung. Die Magnetventilvorrichtung von Fig. 6 weist zumindest im Wesentlichen identische, insbesondere zumindest im Wesentlichen identisch angeordnete Ventilanschlüsse, d.h. den Druckanschluss 36c, den Arbeitsanschluss 38c und den Entlüftungsanschluss 40c auf. Dadurch kann vorteilhaft eine Austauschbarkeit von verschiedenen Ventilteilen 22c ermöglicht bzw. aufrechterhalten werden.

### Bezugszeichen

- 10: Magnetventil
- 12: Magnetteil
- 14: Magnetspulenwicklung
- 16: Inneres
- 18: Magnetkern
- 20: Stößeleinheit
- 22: Ventilteil
- 24: Modul
- 26: Modul
- 28: Dichtungs- und Montagevorrichtung
- 30: Druckausgleichselement
- 32: Rückstellelement
- 34: Gehäuse
- 36: Druckanschluss
- 38: Arbeitsanschluss
- 40: Entlüftungsanschluss
- 42: Dichtungsanordnung
- 44: Dichtung
- 46: Dichtungsdurchmesser
- 48: Wirkdurchmesser
- 50: Erster Ventilsitz
- 52: Zweiter Ventilsitz
- 54: Anschlussvorrichtung
- 56: Steuervorrichtung
- 58: Magnetventilsystem
- 60: Wicklungsträger
- 62: Magnetjoch
- 64: Ventildichtung
- 66: Führungselement
- 68: Magnetbügel
- 70: Flachanker
- 72: Gleitende Dichtung
- 74: Schicht
- 76: Dichtring
- 78: Solenoid
- 80: Magnetkreis
- 82: Scheibenförmiger Endbereich
- 84: Spalt
- 86: Weiterer Spalt
- 88: Wirkdurchmesser
- 90: Ankerstößel
- 92: Koppelelement
- 94: Koppelelement
- 96: Dichtelement
- 98: Magnetteilgehäuse
- 100: Aufnahmebereich
- 102: Schulter
- 104: Hohlraum
- 106: Ventilkette
- 108: Druckleitung
- 110: Oberflächenbeschichtung
- 112: Nut
- 114: Verfahrensschritt
- 116: Verfahrensschritt
- 118: Verfahrensschritt
- 120: Verfahrensschritt
- 122: Verfahrensschritt
- 124: Verfahrensschritt
- 126: Verfahrensschritt
- 128: Ventildichtung
- 130: Bewegungsachse
- 132: Dritter Ventilsitz
- 134: Zwischenbereich

## Patentansprüche

1. Magnetventilvorrichtung für ein druckausgeglichenes Magnetventil (10a, 10a', 10a"; 10b, 10c), insbesondere druckausgleichende Magnetventilvorrichtung, mit einem Magnetteil (12a, 12a', 12a"; 12b, 12c), aufweisend zumindest eine Magnetspulenwicklung (14a; 14b, 14c) und vorzugsweise zumindest einen zumindest teilweise in einem Inneren (16a; 16b, 16c) der Magnetspulenwicklung (14a; 14b, 14c) angeordnetem Magnetkern (18a; 18b, 18c), und mit einem Ventilteil (22a, 22a', 22a", 22a‴; 22b, 22c), aufweisend zumindest eine Stößeleinheit (20a; 20b, 20c), welche zumindest dazu vorgesehen ist, zumindest einen Durchflusspfad durch das Magnetventil (10a, 10a', 10a"; 10b, 10c) zu steuern und welche zumindest dazu vorgesehen ist, mit einem innerhalb des Magnetteils (12a, 12a', 12a"; 12b, 12c) erzeugten Magnetfeld zumindest zu einer Erzeugung zumindest einer Bewegung der Stößeleinheit (20a; 20b, 20c) wechselzuwirken, **dadurch gekennzeichnet, dass** der Magnetteil (12a, 12a', 12a"; 12b, 12c) und der Ventilteil (22a, 22a', 22a", 22a‴; 22b, 22c) separierbare, unabhängig voneinander funktionsfähige Module (24a, 26a; 24b, 26b; 24c, 26c) ausbilden, welche insbesondere frei sind von gemeinsamen funktionellen Bauteilen, wie beispielsweise einem gemeinsamen Magnetanker, wobei der Magnetteil (12a, 12a', 12a"; 12b, 12c) zumindest im Wesentlichen frei ist von beweglich gelagerten Komponenten und/oder von in zumindest einem Betriebszustand in den Ventilteil (22a, 22a', 22a", 22a‴; 22b, 22c) zumindest teilweise eingreifenden Komponenten.

2. Magnetventilvorrichtung nach Anspruch 1, **dadurch gekennzeichnet, dass** der Ventilteil (22a, 22a', 22a", 22a‴; 22b, 22c) zumindest im Wesentlichen frei ist von in zumindest einem Betriebszustand in den Magnetteil (12a, 12a', 12a"; 12b, 12c) zumindest teilweise eingreifenden Komponenten.

3. Magnetventilvorrichtung nach einem der vorhergehenden Ansprüche, **dadurch gekennzeichnet, dass** der Ventilteil (22a, 22a', 22a", 22a‴; 22b, 22c) und/oder der Magnetteil (12a, 12a', 12a"; 12b, 12c) eine Dichtungs- und Montagevorrichtung (28a; 28b, 28c) aufweist, welche dazu vorgesehen ist, eine Kopplung des durch den Ventilteil (22a, 22a', 22a", 22a‴; 22b, 22c) gebildeten Moduls (26a; 26b, 26c) und des durch den Magnetteil (12a, 12a', 12a"; 12b, 12c) gebildeten Moduls (24a; 24b, 24c) herzustellen.

4. Magnetventilvorrichtung nach Anspruch 3, **dadurch gekennzeichnet, dass** zumindest das mit dem Ventilteil (22a, 22a', 22a", 22a‴; 22b, 22c) gekoppelte, durch das Magnetteil (12a, 12a', 12a"; 12b, 12c) gebildete, Modul (24a; 24b, 24c) zerstörungsfrei von dem Ventilteil (22a, 22a', 22a", 22a‴; 22b, 22c) entkoppelbar ist.

5. Magnetventilvorrichtung nach einem der vorhergehenden Ansprüche, **dadurch gekennzeichnet, dass** die Stößeleinheit (20a; 20b, 20c) zumindest teilweise einen Flachanker (70a; 70b, 70c) ausbildet.

6. Magnetventilvorrichtung nach einem der vorhergehenden Ansprüche, **dadurch gekennzeichnet, dass** die Stößeleinheit (20a; 20b, 20c) zumindest ein Druckausgleichselement (30a; 30b, 30c) aufweist.

7. Magnetventilvorrichtung nach einem der vorhergehenden Ansprüche, **dadurch gekennzeichnet, dass** die Stößeleinheit (20a; 20b, 20c) zumindest ein Rückstellelement (32a; 32b, 32c) aufweist, welches gegen den Magnetteil (12a, 12a', 12a"; 12b, 12c) abgestützt ist.

8. Magnetventilvorrichtung nach den Ansprüchen 6 und 7, **dadurch gekennzeichnet, dass** das Rückstellelement (32a; 32b, 32c) zumindest teilweise innerhalb des Druckausgleichselements (30a; 30b, 30c) angeordnet ist.

9. Magnetventilvorrichtung nach einem der vorhergehenden Ansprüche, **dadurch gekennzeichnet, dass** der Ventilteil (22a, 22a', 22a", 22a‴; 22b, 22c) zumindest ein Gehäuse (34a; 34b, 34c) mit zumindest einem Druckanschluss (36a, 36a'; 36b, 36c), zumindest einem Arbeitsanschluss (38a, 38a'; 38b, 38c) und/oder zumindest einem Entlüftungsanschluss (40a, 40a'; 40b, 40c) umfasst, wobei der Druckanschluss (36a, 36a'; 36b, 36c) zumindest mittels einer Dichtungsanordnung (42a; 42b, 42c) gegenüber dem Arbeitsanschluss (38a, 38a'; 38b, 38c) und/oder dem Entlüftungsanschluss (40a, 40a'; 40b, 40c) abgedichtet ist.

10. Magnetventilvorrichtung nach Anspruch 9, **dadurch gekennzeichnet, dass** zumindest eine Dichtung (44a; 44b) der Dichtungsanordnung (42a; 42b) einen Dichtungsdurchmesser (46a; 46b) aufweist, welcher einem Wirkdurchmesser (48a; 48b) zumindest eines Ventilsitzes (50a, 52a; 50b, 52b) des Ventilteils (22a, 22a', 22a", 22a‴; 22b) zumindest im Wesentlichen entspricht.

11. Magnetventilvorrichtung nach Anspruch 9 oder 10, **dadurch gekennzeichnet, dass** die Dichtungsanordnung (42a; 42b) zumindest eine gleitende Dichtung (72a; 72b) umfasst.

12. Magnetventilvorrichtung nach Anspruch 11, **dadurch gekennzeichnet, dass** die gleitende Dichtung (72a; 72b) einen Dichtring (76a; 76b) umfasst, welcher zumindest zu einem Großteil aus einem Elastomer ausgebildet ist, und wobei das Elastomer eine dünne Schicht (74a; 74b) aus Polytetrafluorethylen aufweist.

13. Magnetventilvorrichtung nach einem der vorhergehenden Ansprüche, **dadurch gekennzeichnet, dass** zumindest der Magnetteil (12a, 12a', 12a"; 12b, 12c) hermetisch umspritzt ist.

14. Magnetventilvorrichtung nach einem der vorhergehenden Ansprüche, **dadurch gekennzeichnet, dass** die Stößeleinheit (20c) zumindest eine erste Ventildichtung (64c) und zumindest eine zweite Ventildichtung (128c) aufweist, welche insbesondere entlang einer Bewegungsachse (130c) der Stößeleinheit (20c) von der ersten Ventildichtung (64c) beabstandet ist, wobei die Ventildichtungen (64c, 128c) dazu vorgesehen sind, jeweils unterschiedliche Durchflusspfade durch das Magnetventil (10c) zu blockieren und/oder freizugeben.

15. Druckausgeglichenes Magnetventil (10a, 10a', 10a"; 10b, 10c) mit einer Magnetventilvorrichtung nach einem der vorhergehenden Ansprüche, **gekennzeichnet durch** eine Ausbildung als 3/2 NO-Ventil, als 3/2 NC-Ventil, als 2/2 NO-Ventil oder als 2/2 NC-Ventil.

16. Magnetventilsystem (58a; 58b, 58c) mit einer Magnetventilvorrichtung nach einem der Ansprüche 1 bis 14 und/oder mit einem Magnetventil (10a, 10a', 10a"; 10b, 10c) nach Anspruch 15, mit einer Mehrzahl an zumindest teilweise unterschiedlich zueinander ausgebildeten, austauschbar mit dem Ventilteil (22a, 22a', 22a", 22a‴; 22b, 22c) koppelbaren und als separierbares Modul (24a; 24b, 24c) ausgebildeten Magnetteilen (12a, 12a', 12a"; 12b, 12c) und/oder mit einer Mehrzahl an zumindest teilweise unterschiedlich zueinander ausgebildeten, austauschbar mit dem Magnetteil (12a, 12a', 12a"; 12b, 12c) koppelbaren und als separierbares Modul (26a; 26b, 26c) ausgebildeten Ventilteilen (22a, 22a', 22a", 22a‴; 22b, 22c).

17. Magnetteil (12a, 12a', 12a"; 12b, 12c) der Magnetventilvorrichtung nach einem der Ansprüche 1 bis 14 und/oder des Magnetventils (10a, 10a', 10a"; 10b, 10c) nach Anspruch 15.

18. Ventilteil (22a, 22a', 22a", 22a‴; 22b, 22c) der Magnetventilvorrichtung nach einem der Ansprüche 1 bis 14 und/oder des Magnetventils (10a, 10a', 10a"; 10b, 10c) nach Anspruch 15.

## Claims

1. Solenoid valve device for a pressure-compensated solenoid valve (10a, 10a', 10a"; 10b, 10c), in particular a pressure-compensating solenoid valve device,
with a magnet element (12a, 12a', 12a"; 12b, 12c) comprising at least one magnet coil winding (14a; 14b; 14c) and preferably at least one magnet core (18a; 18b, 18c) that is arranged at least partly in an interior (16a; 16b; 16c) of the magnet coil winding (14a; 14b; 14c),
and with a valve element (22a, 22a', 22a", 22a‴; 22b, 22c) comprising at least one plunger unit (20a; 20b; 20c) which is at least configured to control at least one flow-through path through the solenoid valve (10a, 10a', 10a"; 10b, 10c) and which is at least configured to interact with a magnetic field created within the magnet element (12a, 12a', 12a"; 12b, 12c) at least for a generation of at least one movement of the plunger unit (20a; 20b, 20c),
**characterised in that** the magnet element (12a, 12a', 12a"; 12b, 12c) and the valve element (22a, 22a', 22a", 22a‴; 22b, 22c) form separable modules (24a, 26a; 24b, 26b; 24c, 26c) which are functional independently from each other, which are in particular free of common functional components, like for example a common magnet armature,
the magnet element (12a, 12a', 12a"; 12b, 12c) being at least substantially free of movably supported components and/or of components which in at least one operation state at least partly engage into the valve element (22a, 22a', 22a", 22a‴; 22b, 22c).

2. Solenoid valve device according to claim 1,
**characterised in that** the valve element (22a, 22a', 22a", 22a‴; 22b, 22c) is at least substantially free of components which in at least one operation state at least partly engage into the magnet element (12a, 12a', 12a"; 12b, 12c).

3. Solenoid valve device according to one of the preceding claims,
**characterised in that** the valve element (22a, 22a', 22a", 22a‴; 22b, 22c) and/or the magnet element (12a, 12a', 12a"; 12b, 12c) comprise/s a sealing and assembly device (28a; 28b; 28c) which is configured to establish a coupling of the module (26a; 26b, 26c) formed by the valve element (22a, 22a', 22a", 22a‴; 22b, 22c) and the module (24a; 24b, 24c) formed by the magnet element (12a, 12a', 12a"; 12b, 12c).

4. Solenoid valve device according to claim 3,
**characterised in that** at least the module (24a; 24b, 24c) that is formed by the magnet element (12a, 12a', 12a"; 12b, 12c) and is coupled with the valve element (22a, 22a', 22a", 22a‴; 22b, 22c) can be uncoupled from the valve element (22a, 22a', 22a", 22a‴; 22b, 22c) in a non-destructive manner.

5. Solenoid valve device according to one of the preceding claims,
**characterised in that** the plunger unit (20a; 20b, 20c) at least partly forms a flat armature (70a; 70b; 70c).

6. Solenoid valve device according to one of the preceding claims,
**characterised in that** the plunger unit (20a; 20b, 20c) comprises at least one pressure compensation element (30a; 30b; 30c).

7. Solenoid valve device according to one of the preceding claims,
**characterised in that** the plunger unit (20a; 20b, 20c) comprises at least one reset element (32a; 32b, 32c), which is supported against the magnet element (12a, 12a', 12a"; 12b, 12c).

8. Solenoid valve device according to claims 6 and 7,
**characterised in that** the reset element (32a; 32b, 32c) is arranged at least partly within the pressure compensation element (30a; 30b; 30c).

9. Solenoid valve device according to one of the preceding claims,
**characterised in that** the valve element ((22a, 22a', 22a", 22a‴; 22b, 22c) comprises at least one housing (34a; 34b; 34c) with at least one pressure port (36a, 36a'; 36b, 36c), at least one work port (38a, 38a'; 38b, 38c) and/or at least one venting port (40a, 40a'; 40b, 40c),
the pressure port (36a, 36a'; 36b, 36c) being sealed against the work port (38a, 38a'; 38b, 38c) and/or the venting port (40a, 40a'; 40b, 40c) at least by means of a sealing arrangement (42a; 42b, 42c).

10. Solenoid valve device according to claim 9,
**characterised in that** at least one sealing (44a; 44b) of the sealing arrangement (42a; 42b) has a sealing diameter (46a; 46b) that at least substantially corresponds to an effective diameter (48a; 48b) of at least one valve seat (50a, 52a; 50b, 52b) of the valve element (22a, 22a', 22a', 22a""; 22b).

11. Solenoid valve device according to claim 9 or 10,
**characterised in that** the sealing arrangement (42a; 42b) comprises at least one slide sealing (72a; 72b).

12. Solenoid valve device according to claim 11,
**characterised in that** the slide sealing (72a; 72b) comprises a sealing ring (76a; 76b) that is at least largely formed from elastomer, the elastomer comprising a thin layer (74a; 74b) of polytetrafluoroethylene.

13. Solenoid valve according to one of the preceding claims,
**characterised in that** at least the magnet element (12a, 12a', 12a"; 12b, 12c) is overmoulded hermetically.

14. Solenoid valve device according to one of the preceding claims,
**characterised in that** the plunger unit (20c) comprises at least one first valve sealing (64c) and at least one second valve sealing (128c), which is in particular spaced apart from the first valve sealing (64c) along a movement axis (130c) of the plunger unit (20c), the valve sealings (64c, 128c) being configured for blocking and/or opening respectively different flow-through paths through the solenoid valve (10c).

15. Pressure-compensated solenoid valve (10a, 10a', 10a"; 10b, 10c) with a solenoid valve device according to one of the preceding claims,
**characterised by** a realisation as a 3/2 NO valve, as a 3/2 NC valve, as a 2/2 NO valve or as a 2/2 NC valve.

16. Solenoid valve system (58a; 58b, 58c) with a solenoid valve device according to one of claims 1 to 14 and/or with a solenoid valve (10, 10a', 10a"; 10b, 10c) according to claim 15,
with a plurality of magnet elements (12a, 12a', 12a"; 12b, 12c), which are embodied as a separable module (24a; 24b, 24c), which are at least partly realized differently from one another and which are exchangeably couplable with the valve element ((22a, 22a', 22a", 22a‴; 22b, 22c),
and/or with a plurality of valve elements ((22a, 22a', 22a", 22a‴; 22b, 22c), which are embodied as a separable module (26a; 26b, 26c), which are at least partly realized differently from one another and which are exchangeably couplable with the magnet element (12a, 12a', 12a"; 12b, 12c).

17. Magnet element (12a, 12a', 12a"; 12b, 12c) of the solenoid valve device according to one claims 1 to 14 and/or of the solenoid valve (10a, 10a', 10a"; 10b, 10c) according to claim 15.

18. Valve element ((22a, 22a', 22a", 22a‴; 22b, 22c) of the solenoid valve device according to one claims 1 to 14 and/or of the solenoid valve (10a, 10a', 10a"; 10b, 10c) according to claim 15.

## Revendications

1. Dispositif d'électrovanne pour une électrovanne pressurisée (10a, 10a', 10a" ; 10b, 10c), en particulier dispositif d'électrovanne pressurisant,
avec un élément aimant (12a, 12a', 12a" ; 12b, 12c) comprenant au moins un enroulement de bobine d'électroaimant (14a ; 14b, 14c) et de préférence au moins un noyau d'aimant (18a ; 18b, 18c) disposé au moins partiellement dans un intérieur (16a ; 16b, 16c) de l'enroulement de bobine d'électroaimant (14a ; 14b, 14c),
et avec un élément vanne (22a, 22a', 22a", 22a‴ ; 22b, 22c) comprenant au moins une unité de poussoir (20a ; 20b, 20c) qui est configurée au moins pour commander au moins un chemin de passage à travers l'électrovanne (10a, 10a', 10a" ; 10b, 10c) et qui est au moins configurée pour interagir avec un champ magnétique, généré dans l'élément aimant (12a, 12a', 12a" ; 12b, 12c), au moins pour générer au moins un mouvement de l'unité de poussoir (20a ; 20b, 20c),
**caractérisé en ce que** l'élément aimant (12a, 12a', 12a" ; 12b, 12c) et l'élément vanne (22a, 22a', 22a", 22a‴ ; 22b, 22c) forment des modules (24a, 26a ; 24b, 26b, 24c, 26c) qui sont séparables et capables de fonctionner indépendamment l'un de l'autre, qui sont en particulier libres de composants fonctionnels communs, comme par exemple une armature magnétique commune,
l'élément aimant (12a, 12a', 12a" ; 12b, 12c) étant au moins sensiblement libre de composants supportés de façon mobile et/ou de composants qui au moins partiellement s'engrènent dans l'élément vanne (22a, 22a', 22a", 22a‴ ; 22b, 22c) en au moins un état de fonctionnement.

2. Dispositif d'électrovanne selon la revendication 1,
**caractérisé en ce que** l'élément vanne (22a, 22a', 22a", 22a‴ ; 22b, 22c) est au moins sensiblement libre de composants qui au moins partiellement s'engrènent dans l'élément aimant (12a, 12a', 12a" ; 12b, 12c) en au moins un état de fonctionnement.

3. Dispositif d'électrovanne selon l'une des revendications précédentes,
**caractérisé en ce que** l'élément vanne (22a, 22a', 22a", 22a‴ ; 22b, 22c) et/ou l'élément aimant (12a, 12a', 12a" ; 12b, 12c) comprennent/comprend un dispositif d'étanchéité et montage (28a ; 28b, 28c) qui est configuré pour produire un couplage du module (26a ; 26b, 26c) formé par l'élément vanne (22a, 22a', 22a", 22a‴ ; 22b, 22c) et du module (24a ; 24b, 24c) formé par l'élément aimant (12a, 12a', 12a" ; 12b, 12c).

4. Dispositif d'électrovanne selon la revendication 3,
**caractérisé en ce qu'**au moins le module (24a ; 24b, 24c) formé par l'élément aimant (12a, 12a', 12a" ; 12b, 12c) et couplé avec l'élément vanne (22a, 22a', 22a", 22a‴ ; 22b, 22c) peut être découplé de l'élément vanne (22a, 22a', 22a", 22a‴ ; 22b, 22c) sans déstruction.

5. Dispositif d'électrovanne selon l'une des revendications précédentes,
**caractérisé en ce que** l'unité de poussoir (20a ; 20b, 20c) forme au moins une armature plate (70a ; 70b, 70c).

6. Dispositif d'électrovanne selon l'une des revendications précédentes,
**caractérisé en ce que** l'unité de poussoir (20a ; 20b, 20c) comporte au moins un élément de pressurisation (30a ; 30b, 30c).

7. Dispositif d'électrovanne selon l'une des revendications précédentes,
**caractérisé en ce que** l'unité de poussoir (20a ; 20b, 20c) comprend au moins un élément de rappel (32a ; 32b, 32c) qui est supporté contre l'élément aimant (12a, 12a', 12a" ; 12b, 12c).

8. Dispositif d'électrovanne selon les revendications 6 et 7,
**caractérisé en ce que** l'élément de rappel (32a ; 32b, 32c) est disposé au moins partiellement dans l'élément de pressurisation (30a ; 30b, 30c).

9. Dispositif d'électrovanne selon l'une des revendications précédentes,
**caractérisé en ce que** l'élément vanne (22a, 22a', 22a", 22a‴ ; 22b, 22c) comprend au moins un boîtier (34a ; 34b ; 34c) avec au moins un raccord de pression (36a, 36a' ; 36b, 36c), au moins un raccord de travail (38a, 38a' ; 38b, 38c) et/ou au moins un raccord d'aération (40a, 40a' ; 40b, 40c),
le raccord de pression (36a, 36a' ; 36b, 36c) étant scellé contre le raccord de travail (38a, 38a' ; 38b, 38c) et/ou le raccord d'aération (40a, 40a' ; 40b, 40c) au moins par le biais d'un arrangement de scellage (42a ; 42b, 42c).

10. Dispositif d'électrovanne selon la revendication 9,
**caractérisé en ce que** l'au moins une étanchéité (44a ; 44b) de l'arrangement de scellage (42a ; 42b, 42c) présente un diamètre d'étanchéité (46a ; 46b) correspondant au moins sensiblement à un diamètre effectif (48a ; 48b) d'au moins un siège de vanne (50a, 52a ; 50b, 52b) de l'élément vanne (22a, 22a', 22a", 22a‴ ; 22b, 22c).

11. Dispositif d'électrovanne selon la revendication 9 ou 10,
**caractérisé en ce que** l'arrangement de scellage (42a ; 42b) comporte au moins une étanchéité glissante (72a ; 72b).

12. Dispositif d'électrovanne selon la revendication 11,
**caractérisé en ce que** l'étanchéité glissante (72a ; 72b) comporte une bague d'étanchéité (76a ; 76b) qui est formée au moins en grande partie d'un élastomère, ledit élastomère comprenant une mince couche (74a ; 74b) de polytétrafluoroethy-lène.

13. Dispositif d'électrovanne selon l'une des revendications précédentes,
**caractérisé en ce qu'**au moins l'élément aimant (12a, 12a', 12a" ; 12b, 12c) est surmoulé hermétiquement.

14. Dispositif d'électrovanne selon l'une des revendications précédentes,
**caractérisé en ce que** l'unité de poussoir (20c) comprend au moins une première étanchéité vanne (64c) et au moins une deuxième étanchéité vanne (128c) qui est en particulier écartée de la première étanchéité vanne (64c) le long d'un axe de mouvement (130c) de l'unité de poussoir (20c), les étanchéités vanne (64c, 128c) étant configurées pour respectivement bloquer et/ou liberer des chemins de passage différents à travers l'électrovanne (10c).

15. Électrovanne pressurisée (10a, 10a', 10a" ; 10b, 10c) avec un dispositif d'électrovanne selon l'une des revendications précédentes,
**caractérisé par** une formation comme vanne 3/2 NO, comme vanne 3/2 NC, comme vanne 2/2 NO ou comme vanne 2/2 NC.

16. Système d'électrovanne (58a ; 58b, 58c) avec un dispositif d'électrovanne selon l'une des revendications 1 à 14 et/ou avec une électrovanne (10a, 10a', 10a" ; 10b, 10c) selon la revendication 15,
avec une pluralité d'éléments aimant (12a, 12a', 12a") qui sont au moins partiellement réalisés différant l'un de l'autre, qui peuvent être couplés échangeablement avec l'élément vanne (22a, 22a', 22a", 22a‴ ; 22b, 22c) et qui sont réalisés comme module séparable (24a ; 24b, 24c), et/ou
avec une pluralité d'éléments vanne (22a, 22a', 22a", 22a‴ ; 22b, 22c) qui sont au moins partiellement réalisés différant l'un de l'autre, qui peuvent être couplés échangeablement avec l'élément aimant (12a, 12a', 12a" ; 12b, 12c) et qui sont réalisés comme module séparable (26a ; 26b, 26c).

17. Élément aimant (12a, 12a', 12a" ; 12b, 12c) du dispositif d'électrovanne selon l'une des revendications 1 à 14 et/ou de l'électrovanne (10a, 10a', 10a" ; 10b, 10c) selon la revendication 15.

18. Élément vanne (22a, 22a', 22a", 22a‴ ; 22b, 22c) du dispositif d'électrovanne selon l'une des revendications 1 à 14 et/ou de l'électrovanne (10a, 10a', 10a" ; 10b, 10c) selon la revendication 15.
